# EUROPEAN PATENT APPLICATION

(11) **EP 2 228 108 A2**
(43) Date of publication of application: **15.09.2010**
(21) Application number: 10167977.7
(22) Date of filing: 27.10.2008
(51) Int. Cl.: A63F 13/02, A63F 13/08

(54) **Operation tool, operation input evaluation method, storage medium, and game device.**

(30) Priority: 26.10.2007 JP 2007279710
(62) Divisional of application: 08167606.6
(71) Applicant: Namco Bandai Games Inc., Shinagawa-ku Tokyo 140-8590 (JP)
(72) Inventor: Nakajima, Nobutaka, Shinagawa-ku Tokyo 140-8590 (JP)
(74) Representative: Emerson, Peter James

(57) **Abstract**

An operation tool that holds a game controller that includes an acceleration detection section, comprises:
a fitting section that is formed in such a shape that the game controller is fitted into the fitting section;
an operation input area that is provided at a position away from the fitting section, and is operated by a player; and
a transmission mechanism section that transmits an operation force applied to the operation input area to the game controller fitted into the fitting section through a transmission rod.

## Description

### BACKGROUND

A music game has been known as one type of game. The music game allows the player to enjoy virtual dancing or playing of a musical instrument by performing a given action operation input (e.g., operating a controller that imitates a musical instrument or performing dance steps at a given timing) in rhythm and tempo.

The music game is normally played in a video arcade or the like, and the player normally plays the music game using a dedicated game device developed for business use. In recent years, a music game that allows the player to enjoy virtual playing of a Japanese drum or the like using a dedicated controller connected to a consumer game device has been developed, and has become popular since it allows family play (see JP-A-2004-313764, for example).

When using a dedicated controller as disclosed in JP-A-2004-313764, the controller must be provided with high durability against an action operation input (e.g., hitting operation). Therefore, man-hours and cost required for producing the controller are increased in order to improve the structural strength of the controller or provide vibration-proof electronic components in the controller.

EP-1757345 discloses details of the Nintendo Wii game controller, which is of the type usable in the current invention.

US-2005/0056997 discloses a musical type input device for a video game, shaped like bongo drums which a player may hit in a rhythm game or similar being played on the game machine. The operating apparatus registers the hitting of the player on the drum shaped operating members and convey this to the game machine.

### SUMMARY

According to one aspect of the invention, there is provided an operation tool that holds a game controller that includes an acceleration detection section, the operation tool comprising:
a fitting section that is formed in such a shape that the game controller is fitted into the fitting section;
an operation input area that is provided at a position away from the fitting section, and is operated by a player; and
a transmission mechanism section that transmits an operation force applied to the operation input area to the game controller fitted into the fitting section through a transmission rod.

According to a second aspect of the invention there is provided an operation input evaluation method executed by a computer that includes a communication section, the operation input evaluation method comprising:
instructing a player to perform an operation input at a given timing;
receiving a detection signal from the acceleration detection section of the game controller held in the fitting section of the operation tool in accordance with the first aspect by controlling the communication section;
detecting whether or not the player has performed the operation input based on the received detection signal; and
evaluating the operation input based on whether or not the player has performed the operation input at the given timing.

According to a third aspect of the invention there is provided a computer-readable storage medium storing a program that causes a computer to execute the method in accordance with the second aspect.

According to a fourth aspect of the invention there is provided a game device comprising:
the operation tool in accordance with the first aspect;
a game controller that is held in the fitting section of the operation tool;
a timing instruction section that instructs a player to perform an operation input at a given timing;
a reception section that receives a detection signal from the acceleration detection section of the game controller;
an operation input detection section that detects whether or not the player has performed the operation input based on the received detection signal; and
an evaluation section that evaluates the operation input based on whether or not the timing instructed by the timing instruction section coincides with the timing detected by the operation input detection section.

The operation tool may further comprise:
a leg portion that maintains the placement position of the operation tool.

The operation tool may further comprise:
a covering section that is formed of an impact buffer member and covers the operation tool.

In an embodiment, the operation tool has
the game controller including a strap; and
the operation tool further comprising an insertion section, the strap of the game controller fitted into the fitting section being exposed through the insertion section.

In an embodiment, the operation tool has
the operation tool being generally in the shape of a guitar;
the fitting section being formed in a neck portion;
the operation input area being formed in a body portion; and
the fitting section being shaped so that the game controller is held by and fitted into the fitting section in a state in which an operation area of the game controller is exposed.

In an embodiment, the operation tool has
the operation tool being generally in the shape of a guitar;
the fitting section being formed in a body portion;
the operation input area being formed in a neck portion; and
the fitting section being shaped so that the game controller is held by and fitted into the fitting section in a state in which an operation area of the game controller is exposed.

The operation tool as defined in the previous two embodiments may have
the operation input area including an operating section that is formed in the shape of a button or a lever.

Such an operation tool may have
the operation input area including a plurality of the operating sections; and
the transmission section transmitting forces input to the plurality of operating sections to the game controller in different directions.

### BRIEF DESCRIPTION OF THE DRAWINGS

FIG. 1 is a configuration diagram showing a configuration example of a consumer game device.
FIGS. 2A to 2C are external views showing a configuration example of a game controller.
FIGS. 3A to 3C are external views showing a configuration example of an operation tool according to a first embodiment.
FIGS. 4A and 4B are development views showing a body portion.
FIG. 5 is a vertical cross-sectional view showing a body portion.
FIG. 6 is a vertical cross-sectional view showing a state in which a game controller is placed in an operation tool according to the first embodiment.
FIG. 7A is a view showing a state in which an operation tool is placed in a normal position, and FIG. 7B is a view showing an example of a change in acceleration when the operation tool is placed in the normal position.
FIG. 8A is a view showing a state in which an operation tool is turned to the left, and FIG. 8B is a view showing an example of a change in acceleration when the operation tool is turned to the left.
FIG. 9A is a view showing a state in which an operation tool is raised, and FIG. 9B is a view showing an example of a change in acceleration when the operation tool is raised.
FIG. 10A is a view illustrative of an upper side hitting operation, and FIG. 10B is a view showing a quick change detection example when the upper side hitting operation has been performed.
FIG. 11A is a view illustrative of a rear end face hitting operation, and FIG. 11B is a view showing a quick change detection example when the rear end face hitting operation has been performed.
FIG. 12A is a view illustrative of a left side hitting operation, and FIG. 12B is a view showing a quick change detection example when the left side hitting operation has been performed.
FIG. 13A is a view illustrative of a slope hitting operation, and FIG. 13B is a view showing a quick change detection example when the slope hitting operation has been performed.
FIG. 14A is a view illustrative of an operation that rubs the upper side of a body portion, and FIG. 14B is a view showing a quick change detection example when the upper side of the body portion has been rubbed.
FIG. 15A is a view illustrative of an operation that rubs the lower side of a body portion, and FIG. 15B is a view showing a quick change detection example when the lower side of the body portion has been rubbed.
FIG. 16 is a view showing an example of a game image according to the first embodiment.
FIGS. 17A and 17B are views showing the relationship between an operation position and sound according to the first embodiment.
FIG. 18 is a functional block diagram showing a functional configuration example according to the first embodiment.
FIG. 19 is a view showing a data configuration example of music data.
FIG. 20 is a view showing a data configuration example of sound table data.
FIG. 21 is a flowchart illustrative of the flow of a process according to the first embodiment.
FIGS. 22A and 22B are views showing an example of a buffer sheet.
FIGS. 23A to 23C are partial cross-sectional views showing the structure and the assembling process of an operation tool 2B according to a second embodiment.
FIGS. 24A to 24C are views showing a configuration example of a first buffer material.
FIGS. 25A and 25B are views showing a configuration example of a positioning plate.
FIGS. 26A to 26C are views showing a configuration example of a second buffer material.
FIGS. 27A to 27C are views showing a configuration example of an outer shell.
FIGS. 28A to 28C are views showing a modification for a game controller of another shape.
FIGS. 29A and 29B are external views showing a configuration example of an operation tool according to a third embodiment.
FIGS. 30A and 30B are exploded views showing an operation tool according to the third embodiment.
FIGS. 31A to 31C are views showing a configuration example of a neck portion and a transmission mechanism.
FIG. 32 is a view showing a configuration example of a transmission mechanism.
FIGS. 33A to 33C are views showing an example of an operation key.
FIGS. 34A to 34C are views showing an example of a knocker.
FIG. 35 is a view showing an example of a game image according to the third embodiment.
FIGS. 36A and 36B are schematic views illustrative of the operation of a transmission mechanism.
FIG. 37 is a flowchart illustrative of the flow of a process according to the third embodiment.
FIG. 38 is a view showing a modification of an operation tool according to the third embodiment.
FIG. 39 is a view showing another modification of an operation tool according to the third embodiment.
FIGS. 40A and 40B are views showing a further modification of an operation tool according to the third embodiment.

### DESCRIPTION OF EXEMPLARY EMBODIMENTS

The invention may enable game play utilizing an action operation input (e.g., hitting or rubbing) using a general-purpose game controller without using a dedicated game controller.

According to one embodiment of the invention, there is provided an operation tool comprising:
a fitting section that is formed in such a shape that a game controller including an acceleration detection section is fitted into the fitting section;
an operation input area that is hit or rubbed by a player; and
a transmission section that transmits a hitting or rubbing force applied to the operation input area to the game controller fitted into the fitting section.

According to this configuration, the game controller can be fitted while maintaining the relative position of the game controller with respect to the operation tool. Moreover, a force externally applied by the player can be transmitted to the game controller. Therefore, since the game controller can be appropriately protected from an impact (i.e., hitting operation) while transmitting a force due to a hitting operation or the like to the game controller, the player can play a game that requires an action operation input at home without using a dedicated controller.

In the operation tool,
the operation input area may be a planar area that intersects a detection direction of the acceleration detection section.

According to this configuration, the operation input determination accuracy based on acceleration detection can be improved.

In the operation tool,
the operation input area may include an elevation/depression section, elevations and depressions being successively or intermittently formed in the elevation/depression section.

According to this configuration, an operation force with a specific pattern can be applied to the game controller by rubbing the elevation/depression section, for example. Therefore, the number of types of operation inputs based on acceleration detection can be increased. When the elevation/depression section is provided along the detection direction of the acceleration detection section, the player can easily determine an operation utilizing the elevation/depression section. Moreover, an acceleration component in a specific detection direction is detected to a large extent. This contributes to an improvement in detection accuracy and determination accuracy.

In the operation tool,
the acceleration detection section may detect accelerations along a plurality of directions; and
the operation input area may include areas that respectively intersect the detection directions of the acceleration detection section.

According to this configuration, the variety of operation inputs can be increased. In the operation tool,
the transmission section may be formed of an elastic foam material such as urethane foam or styrene foam, or an elastic material such as rubber.

According to this configuration, since the protection function against external force can be improved while suppressing an increase in weight, the game controller can be protected more reliably.

When the elastic material has an attenuation effect, noise can be removed from the detected acceleration by moderately attenuating a higher-order vibration component of force externally applied to the game controller or buffering an impact so that the operation input determination accuracy can be improved.

In the operation tool,
the fitting section may be provided in the transmission section, and the fitting section and the transmission section may be formed integrally.

According to this configuration, production man-hours and production cost can be reduced by simplifying the structure. Moreover, breakage can be prevented by simplifying the structure.

In the operation tool,
the transmission section may form an operation tool main body and may be integrally formed with the operation input area.

According to this configuration, production man-hours and production cost can be further reduced.

In the operation tool may further comprise:
an outer casing section that can hold and receive the transmission section in a given position in a state in which the game controller is fitted into the fitting section,
the outer casing section may have the operation input area, and a force applied to the operation input area may be transmitted to the game controller through the outer casing section and the transmission section.

According to this configuration, since the outer casing section can be replaced, the life of the operation tool can be increased. Moreover, the operation tool can be easily applied to a game controller having a different shape by changing the shape of the transmission section.

In the operation tool may further comprise:
a leg portion that maintains the placement position of the operation tool.

According to this configuration, since a situation in which the position of the game controller changes during game play can be prevented, the operation tool can be maintained in a stable position during operation.

In the operation tool may further comprise:
a covering section that is formed of an impact buffer member and covers the operation tool.

According to this configuration, a situation in which the player feels pain due to repeated operation inputs can be suppressed or reduced.

In the operation tool,
the game controller may include a strap; and
the operation tool may further comprise an insertion section, the strap of the game controller fitted into the fitting section being exposed through the insertion section.

According to this configuration, the strap can be utilized even if the game controller is placed in the operation tool. Since the strap is exposed, the strap can function as an indicator that indicates the relative position of the game controller even if the game controller is placed in the operation tool.

In the operation tool,
the operation tool may be generally in the shape of a guitar; the fitting section may be formed in a neck portion;
the operation input area may be formed in a body portion; and
the fitting section may be shaped so that the game controller is held by and fitted into the fitting section in a state in which an operation area of the game controller is exposed.

In the operation tool,
the operation tool may be generally in the shape of a guitar;
the fitting section may be formed in a body portion;
the operation input area may be formed in a neck portion; and
the fitting section may be shaped so that the game controller is held by and fitted into the fitting section in a state in which an operation area of the game controller is exposed.

According to this configuration, the operation tool can be used for a music game in which the player plays a guitar. Since the operation area of the game controller can be operated, the variety of operation inputs can be increased.

In the operation tool,
the operation input area may include an operating section that is formed in the shape of a button or a lever.

According to this configuration, since the operation input position can be indicated and an operation feel due to a biasing material of the operating section in the shape of a lever or a button can be implemented, the operability and the operation feel can be improved.

In the operation tool,
the operation input area may include a plurality of the operating sections; and
the transmission section may transmit forces input to the plurality of operating sections to the game controller in different directions.

According to this configuration, since forces can be transmitted to the game controller in different directions even if the operating sections are operated in an identical direction, the degree of freedom relating to the design and the layout of the operation tool can be increased.

According to another embodiment of the invention, there is provided an operation input evaluation method executed by a computer that includes a communication section, the operation input evaluation method comprising:
instructing a player to perform an operation input at a given timing;
receiving a detection signal from the acceleration detection section of the game controller held in the fitting section of the above operation tool by controlling the communication section;
detecting whether or not the player has performed the operation input based on the received detection signal; and
evaluating the operation input based on whether or not the player has performed the operation input at the given timing.

According to this configuration, the operation input timing can be determined based on the acceleration detected by the game controller held by the operation tool, and whether or not the operation input timing coincides with the instructed timing can be evaluated.

In the operation input evaluation method,
the operation input may be detected by detecting whether or not the player has performed the operation input based on a quick change value obtained by differentiating an acceleration indicated by the received detection signal.

According to this configuration, an instantaneous action of force due to an action operation input (e.g., hitting operation) can be detected accurately.

In the operation input evaluation method,
a determination reference signal corresponding to each type of operation input may be defined in advance;
the instructing of the player to perform the operation input at the given timing may include instructing the player to perform a given type of operation input at the given timing;
the operation input evaluation method may further comprise determining the type of operation input performed by the player based on the received detection signal; and
the operation input may be evaluated based on whether or not the player has performed the instructed operation input at the given timing.

According to this configuration, a game full of variety using a plurality of types of operation inputs can be implemented.

In the operation input evaluation method,
the determination reference signal may be defined based on a quick change value obtained by differentiating an acceleration; and
the type of operation input performed by the player may be determined based on a quick change value obtained by differentiating an acceleration indicated by the received detection signal.

According to this configuration, the operation input determination accuracy can be improved by removing noise from the detected acceleration.

In the operation input evaluation method,
a production effect process may be defined in advance corresponding to each type of operation input; and
the operation input evaluation method may further comprise performing the production effect process corresponding to the type of the operation input that has been determined.

According to this configuration, the production effect process can be executed by operating the operation tool. Examples of the production effect include sound, vibrations, light (emitted from a light-emitting element included in the operation tool), images, and the like. When using sound, a feel of playing a musical instrument can be implemented.

In the operation input evaluation method may further comprise:
determining the position of the operation tool or the game controller based on an acceleration indicated by the received detection signal; and
performing a given production effect process corresponding to the determined position.

According to this configuration, since the position of the game controller can be utilized as an operation input, the variety of operation inputs can be increased. Since the production effect process can be performed corresponding to the position of the game controller, the variety of the production effect can be increased.

For example, when using sound as the production effect, the player can enjoy changing sound by shaking the body and tilting the operation tool as if the player were a guitarist of a rock band.

The production effect process corresponding to the position of the game controller may be a sound filtering process such as providing an echo effect, changing the tone, pitch, or a musical instrument as a sound source, or providing a vibrato effect when using sound as the production effect, for example. When using vibrations as the production effect, the vibration pattern or magnitude may be changed. When using light as the production effect, the light color, pattern, illuminance, or the like may be changed.

According to another embodiment of the invention, there is provided a computer-readable storage medium storing a program that causes a computer to execute the above method.

The term "storage medium" used herein includes a magnetic disk, an optical disk, an IC memory, and the like.

According to another embodiment of the invention, there is provided a game device comprising:
the above operation tool; a game controller held in the fitting section of the operation tool;
a timing instruction section that instructs a player to perform an operation input at a given timing;
a reception section that receives a detection signal from the acceleration detection section of the game controller;
an operation input detection section that detects whether or not the player has performed the operation input based on the received detection signal; and
an evaluation section that evaluates the operation input based on whether or not the timing instructed by the timing instruction section coincides with the timing detected by the operation input detection section.

Embodiments of the invention are described below with reference to the drawings. Note that the following embodiments do not in any way limit the scope of the invention defined by the claims laid out herein. Note that all elements of the following embodiments should not necessarily be taken as essential requirements for the invention.

### First embodiment

A first embodiment to which the invention is applied is described below taking an example in which a game controller of a consumer game device is placed in an operation tool to form a virtual musical instrument, and the player plays a music game by performing an operation input as if to play the virtual musical instrument.

### System configuration

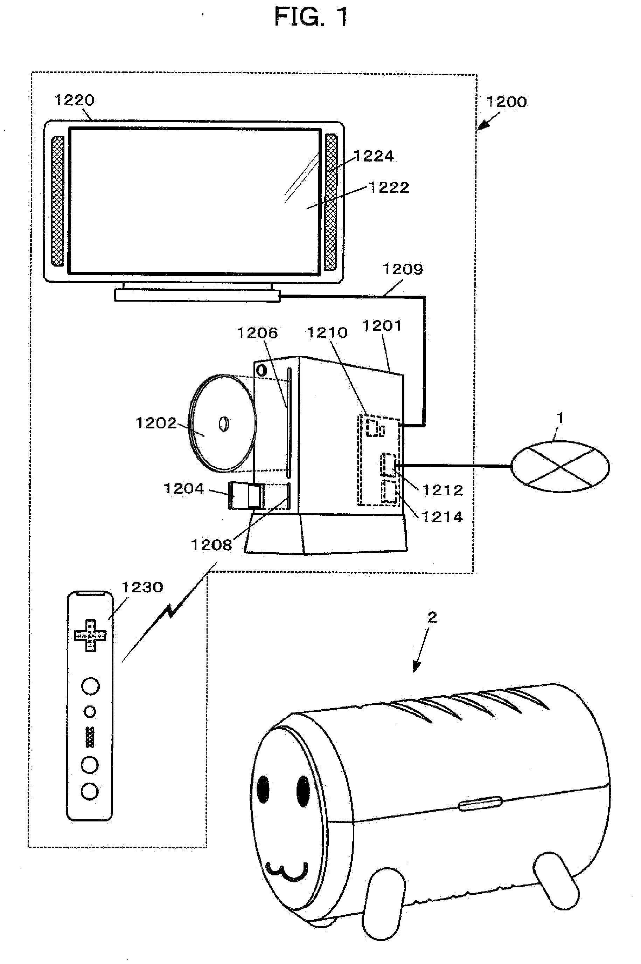

FIG. 1 is a view illustrative of a configuration example of a consumer game device according to this embodiment. As shown in FIG. 1, a consumer game device 1200 includes a game device main body 1201, a game controller 1230, and a video monitor 1220. In this embodiment, the game controller 1230 is placed in an operation tool 2 when playing the game.

The game device main body 1201 includes a control unit 1210 provided with a CPU, an image processing LSI, an IC memory, and the like, and readers 1206 and 1208 for reading data from information storage media such as an optical disk 1202 and a memory card 1204. The consumer game device 1200 executes a given video game by reading a game program and various types of setting data from the optical disk 1202 and the memory card 1204, and causing the control unit 1210 to perform various game calculations based on an operation input performed using the game controller 1230.

The control unit 1210 includes electric/electronic instruments such as various processors (e.g., central processing unit (CPU), graphics processing unit (GPU), and digital signal processor (DSP)), an application-specific integrated circuit (ASIC), and an IC memory, and controls each section of the consumer game device 1200.

The control unit 1210 includes a communication device 1212 that connects to a communication line 1 (e.g., Internet, local area network (LAN), or wide area network (WAN)), and implements data communication with an external device. The control unit 1210 includes a short-distance wireless communication module 1214 that exchanges data with a plurality of game controllers 1230 via short-distance wireless communication. As the short-distance wireless communication method, Bluetooth (registered trademark), ultra-wideband (UWB) wireless communication, a wireless LAN, and the like may be appropriately applied.

The control unit 1210 generates a game image and game sound based on operation input signals received from the game controller 1230 to execute the video game. An image signal and a sound signal based on the game image and the game sound generated by the control unit 1210 are output to the video monitor 1220 (display monitor) connected to the game device main body 1201 via a cable 1209. The video monitor 1220 includes an image display device 1222 that displays an image, and a speaker 1224 that outputs sound. The player plays the game while watching the game image displayed on the image display device 1222 and listening to the game sound output from the speaker 1224.

In this embodiment, the game controller 1230 is placed in the operation tool 2, and the player plays the game by performing an operation input such as hitting (hitting operation) or rubbing (rubbing operation) the operation tool 2 as if to play a virtual drum (i.e., virtual musical instrument). The operation tool 2 according to this embodiment is designed as a character that has a face on one end of an approximately cylindrical four-footed body in order to improve the game playability. Note that the operation tool 2 may be designed as a Japanese drum, a western drum, or the like instead of designing the operation tool 2 as a character.

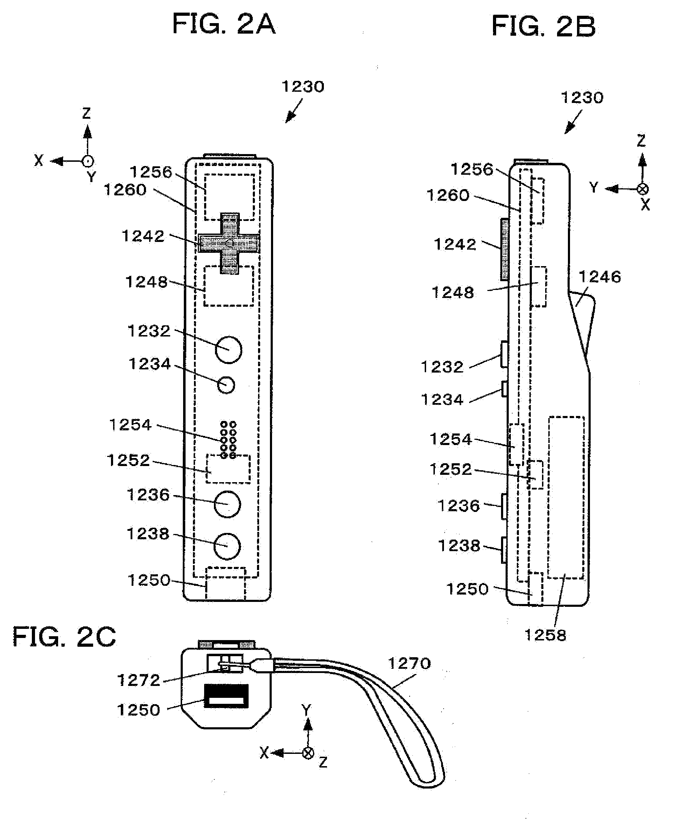

FIGS. 2A to 2C are external views showing an example of the game controller 1230 used in this embodiment. FIG. 2A is a front view, FIG. 2B is a right side view, and FIG. 2C is a bottom view. As shown in FIGS. 2A to 2C, the game controller 1230 is in the shape of a rod that has a chamfered and approximately square cross section. When individually using the game controller 1230, the player operates the game controller 1230 while holding the game controller 1230 with one hand as if to hold a rod.

The game controller 1230 is configured so that a built-in controller control unit 1260, input devices, and output devices are connected via a local bus circuit implemented by an inter-integrated circuit (IIC) bus or the like. The controller control unit 1260 controls input and output between each device.

As the switch input devices, the game controller 1230 includes an A button 1232 and a 1 button 1234 provided at the front center (operation side), and a 2 button 1236 and a D button 1238 provided at the front bottom, for example. The game controller 1230 includes an arrow key 1242 that is provided at the front top and allows the player to individually input the upward, downward, rightward, or leftward direction by pressing one of the four ends of the key. The game controller 1230 includes a trigger 1246 provided on the upper rear side.

As another input device, the game controller 1230 includes an acceleration sensor 1248 that detects the movement and the inclination of the game controller 1230. The acceleration sensor 1248 detects the accelerations in three perpendicular axial directions (i.e., the direction toward the end of the game controller 1230 in the longitudinal direction (upward direction in FIG. 2A) is a positive Z-axis direction, the leftward direction (leftward direction in FIG. 2A) is a positive X-axis direction, and the forward direction (leftward direction in FIG. 2B) is a positive Y-axis direction), and outputs a detection signal (e.g., voltage) corresponding to the detected acceleration to the controller control unit 1260.

The game controller 1230 according to this embodiment includes a vibrator 1252 and a speaker 1254 as the output devices. The vibrator 1252 produces vibrations according to a vibration control signal output from the controller control unit 1260 so that the player who holds the game controller 1230 feels the vibrations. The speaker 1254 generates sound according to a sound output signal output from the controller control unit 1260, and outputs the generated sound from the operation side.

The controller control unit 1260 includes electronic components such as a microchip (e.g., CPU and a bus controller IC that controls data communication through the local bus circuit) and an IC memory, a short-distance wireless communication module 1256 that implements wireless communication with the short-distance wireless communication module 1214 of the game device main body 1201, and the like.

The controller control unit 1260 generates an operation input signal based on signals transmitted from the input devices through the local bus circuit, and transmits the generated operation input signal to the game device main body 1201 through the short-distance wireless communication module 1256. When the controller control unit 1260 has received an output signal transmitted from the game device main body 1201 through the short-distance wireless communication module 1256, the controller control unit 1260 generates and transmits a control signal to the output device corresponding to the received output signal.

Power required for the controller control unit 1260 and each section is supplied from a battery 1258 provided in a battery chamber formed in the rear side of the game controller 1230.

The game controller 1230 according to this embodiment includes an expansion terminal 1250 to which a communication cable that connects an operation input device and the output device is removably connected, and a strap holder 1272 that holds one end of a strap 1270.

The expansion terminal 1250 is a terminal for connecting the local bus circuit provided in the controller control unit 1260 to the outside. A local bus according to this embodiment is implemented in accordance with the inter-integrated circuit (IIC) bus standard, for example. A connector having a given shape can be connected to the local bus via hot plug, and insertion or removal (connection) of a connector or a device can be detected by detecting the voltage of a connection pin included in the expansion terminal 1250.

### Configuration of operation tool

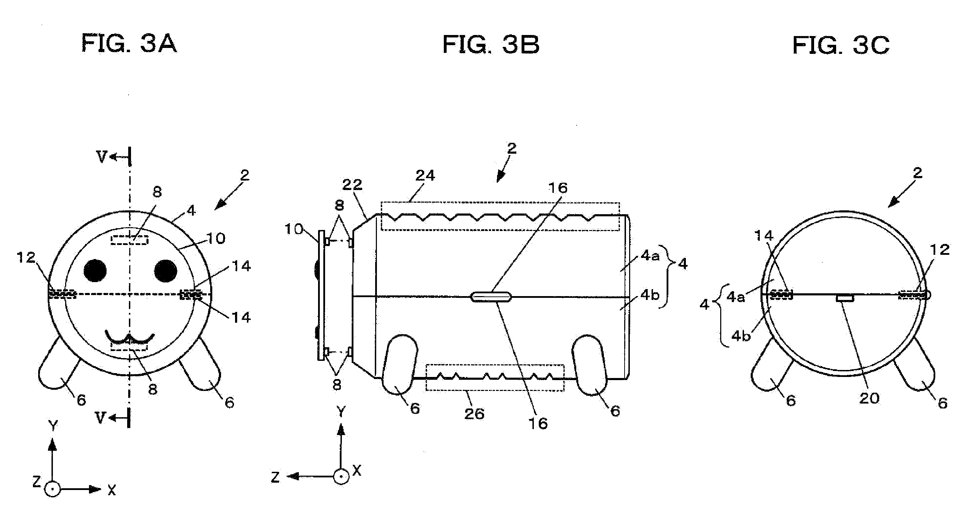

FIGS. 3A to 3C are views showing an example of the appearance of the operation tool 2 according to this embodiment. FIG. 3A is a front end view, FIG. 3B is a left side view, and FIG. 3C is a rear end view.

The operation tool 2 receives the game controller 1230, and serves as a virtual drum hit by the player (subjected to a hitting operation input). The operation tool 2 includes a body portion 4 having an approximately cylindrical shape, four leg portions that extend from the lower side of the body portion 4, and a face portion 10 removably attached to the front face of the body portion 4 using a hook-and-loop fastener 8.

The operation tool 2 is designed as a character having a virtual drum external shape, as described above. An expression of the character is designed in the face portion 10. The upper portion and the lower portion of the face portion 10 are attached to the front face of the body portion 4 placed in a position in which the leg portions 6 are grounded (this position is hereinafter referred to as "normal position") based on the expression of the character to complete the design of the operation tool 2.

The body portion 4 is formed of an elastomeric material (e.g., styrene foam, hard urethane, hard sponge, synthetic rubber block, or compressed corrugated cardboard) that buffers an impact due to a hitting operation input and transmits radio waves. The degree of buffer is desirably determined so that the first-order vibration component of an impact due to a hitting operation is transmitted, but the second or higher-order vibration components of the impact are attenuated and absorbed.

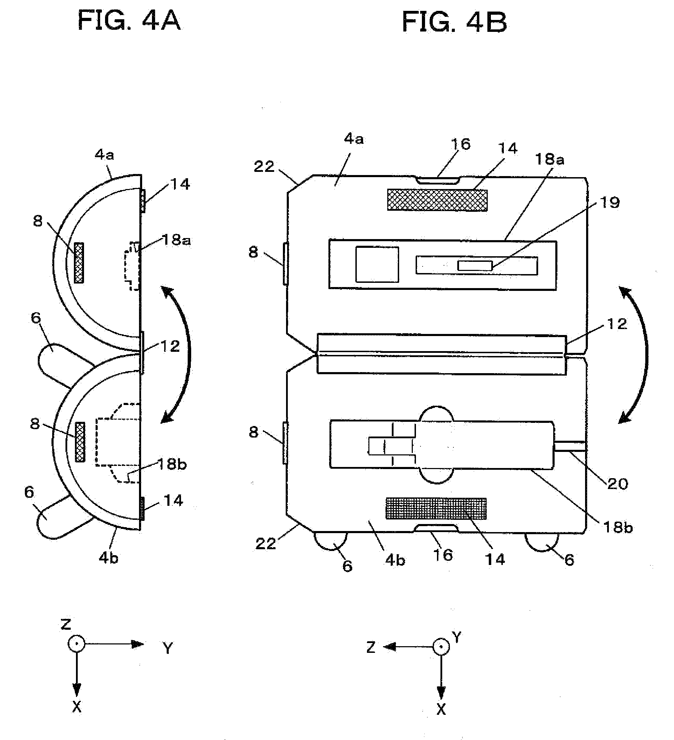

As shown in FIGS. 4A and 4B, the body portion 4 is formed by joining half pieces 4a and 4b having a semicircular cross section through the parting plane, the half pieces 4a and 4b being obtained by vertically dividing the body portion 4 into two portions along the center of the cylinder. A fabric tape 12 that functions as a hinge is attached to one side edge of the half pieces 4a and 4b in the longitudinal direction, and a hook-and-loop fastener 14 is attached to the joining side as a means that joins the half pieces. A depression 16 is formed in the other side edge of each of the half pieces 4a and 4b in the longitudinal direction. The depression 16 functions as a finger recess when opening the joined half pieces 4a and 4b.

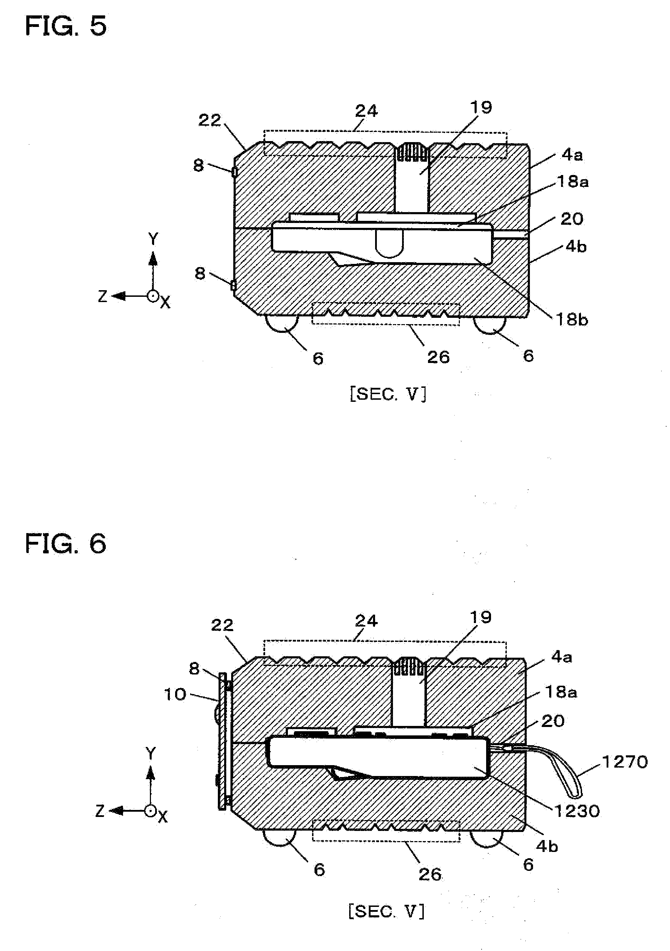

Fitting sections 18a and 18b into which the operation side and the rear side of the game controller 1230 are fitted tightly are formed in the joining sides of the half pieces 4a and 4b, respectively. The fitting sections 18a and 18b may be integrally formed when forming the half pieces 4a and 4b, or may be separately formed by cutting or the like. As indicated by a vertical cross-sectional view of the body portion 4 shown in FIG. 5, when joining the half pieces 4a and 4b, the depressed sections of the fitting sections 18a and 18b face each other to form a space that tightly receives the game controller 1230.

As shown in FIG. 6, the game controller 1230 is fitted (placed) in the operation tool 2 so that the front end of the game controller 1230 faces the front side of the body portion 4, the longitudinal direction of the game controller 1230 is almost parallel to the center axis of the cylinder formed by the body portion 4, and the operation side faces the upper side of the body portion 4. Specifically, the game controller 1230 is secured so that the positive direction of the Z axis among the three axes along which the accelerations are detected by the acceleration sensor 1248 of the game controller 1230 corresponds to the forward direction of the operation tool 2 placed in a state in which the leg portions 6 are grounded (grounded state), the positive direction of the Y axis corresponds to the upward direction of the operation tool 2 in the grounded state, and the positive direction of the X axis corresponds to the leftward direction of the operation tool 2 in the grounded state.

A passage 20 is formed on the rear end face of the fitting section 18b so that the passage 20 reaches the rear end face of the half piece 4b. The strap 1270 of the game controller 1230 placed in the operation tool 2 is exposed on the rear end face of the body portion 4 through the passage 20. The fitting section 18a has a communication hole 19 that reaches the outer circumferential surface of the body portion 4 at a position opposite to the speaker 1254 of the game controller 1230 placed in the operation tool 2 so that sound output from the speaker 1254 is output to the outside.

The outer surface of the body portion 4 serves as a side (operation side or operation position) subjected to a hitting operation performed by the player. The front end face and the rear end face of the body portion 4 are approximately flat, and serve as hitting operation input target sides. The operation tool 2 can be used in an upright position by grounding the rear end face. A slope 22 is formed at the corner of the front end face by diagonally chamfering the front end face at an angle of 45°. The slope 22 also serves as a hitting operation input target side.

Vertical elevation/depression sections 24 and 26 are formed successively or intermittently in the longitudinal direction on the upper side (i.e., the back of the character) and the bottom side (i.e., the belly of the character) of the body portion 4 (see FIGS. 1 and 3). The elevation/depression sections 24 and 26 differ in the depth and the intervals of the elevations and depressions.

### Position determination and hit position determination principle

The principle of an operation input determination process is described below.

In this embodiment, the side (opposite side) opposite to the detection direction of the acceleration sensor 1248 is used as an operation input area. The position of the game controller 1230, the presence or absence of a hitting operation input, and the hit position are determined based on the triaxial accelerations detected by the game controller 1230 placed in the operation tool 2. An operation input type is assigned in advance to each combination of the position of the game controller 1230 and the hit position. The control unit 1210 determines the operation input type based on the triaxial accelerations.

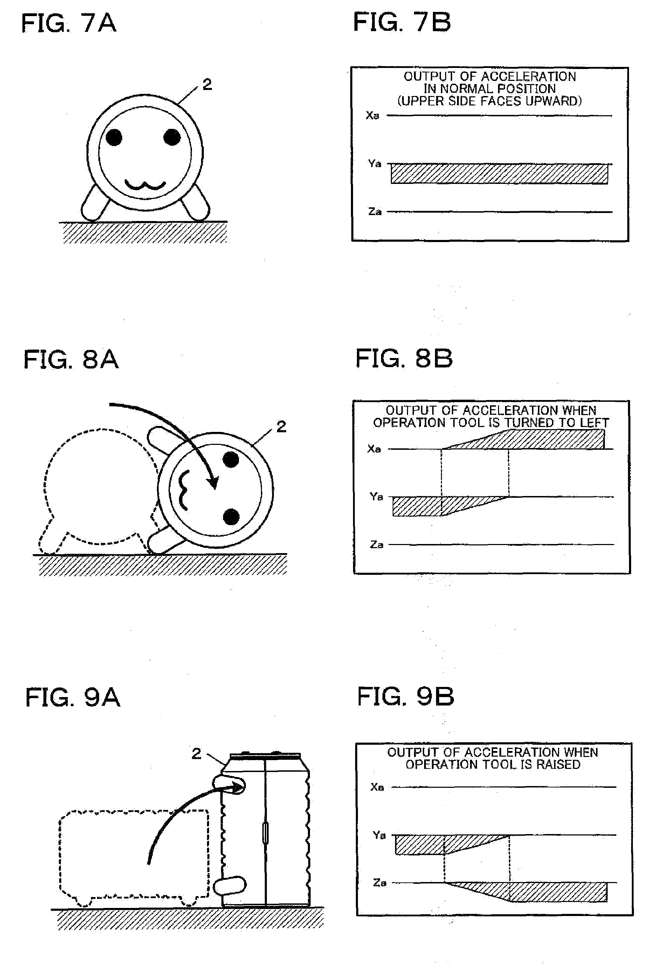

The position of the game controller 1230 may be determined based on the following principle. Specifically, when the operation tool 2 stands still in the normal position (see FIG. 7A), among the triaxial accelerations (Xa, Ya, Za) detected by the acceleration sensor 1248, a value corresponding to the gravitational acceleration is detected as the Y-axis acceleration (Ya) in the negative direction, but the X-axis acceleration and the Z-axis acceleration are not detected (see FIG. 7B). When the operation tool 2 is turned to the left from the normal position (see FIG. 8A), the Y-axis acceleration (Ya) gradually approaches zero from the turn timing, and the X-axis acceleration (Xa) gradually increases so that a value corresponding to the gravitational acceleration is detected in the positive direction along the X axis (see FIG. 8B). When the operation tool 2 is raised from the normal position so that the rear end face is grounded (see FIG. 9A), the Y-axis acceleration (Ya) gradually approaches zero from the turn timing, and the Z-axis acceleration (Za) is gradually detected in the negative direction so that a value corresponding to the gravitational acceleration is detected in the negative direction along the Z axis (see FIG. 9B).

Therefore, whether the game controller 1230 is in the normal position, the sideways position, or the upright position can be determined by determining the acceleration in each axial direction with respect to the acceleration corresponding to the gravitational acceleration. A tilted position around each axis can be determined based on the accelerations along a plurality of axes, as indicated by the sideways turning process and the raising process shown in FIGS. 8 and 9.

In this embodiment, a differential value (i.e., quick change value) of the acceleration detected by the acceleration sensor 1248 is calculated, and the presence or absence of a hitting operation input is determined based on a spike input of the quick change value.

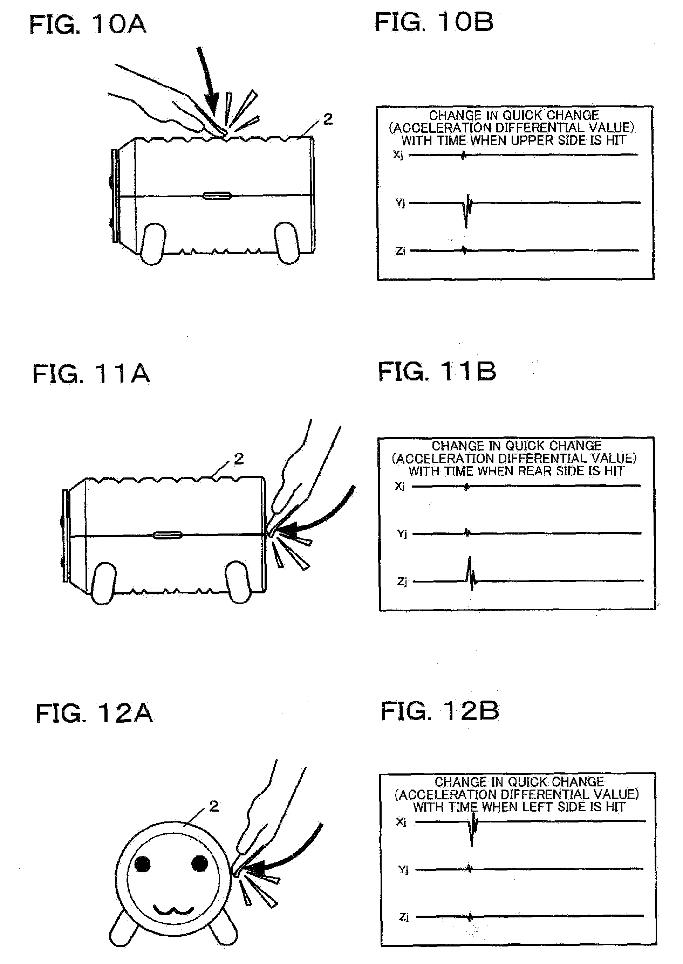

Specifically, when the game controller 1230 is placed in the normal position and the player has hit the upper side of the operation tool 2 (see FIG. 10A), for example, a change in quick change value is detected for the three axes (see FIG. 10B). In particular, a large spike quick change is detected in the negative Y-axis direction. Therefore, when a spike quick change has been detected in the negative Y-axis direction, it can be determined that the player has hit the upper side of the operation tool 2. On the other hand, when the player has hit the lower side of the operation tool 2, a large spike quick change is detected in the positive Y-axis direction. Whether or not a spike quick change has occurred may be determined using a known impact determination technology. Alternatively, a period of time required for the quick change value to become zero after the first quick change peak has been detected may be compared with a given standard, for example. It may be determined that a spike quick change has occurred when the above-mentioned period of time is sufficiently short (i.e., the standard is satisfied), and it may be determined that the quick change value has merely changed when the above-mentioned period of time is longer than the standard (i.e., when the quick change value has gradually approached zero).

As shown in FIGS. 11A and 11B, when the game controller 1230 is placed in the normal position and a large spike quick change is detected in the positive Z-axis direction, but only a small spike quick change is detected for the remaining axes, it can be determined that the player has hit the rear end face of the operation tool 2. On the other hand, when the player has hit the front end face of the operation tool 2, a large spike quick change is detected in the negative Z-axis direction, but only a small spike quick change is detected for the remaining axes.

As shown in FIGS. 12A and 12B, when the game controller 1230 is placed in the normal position and a large spike quick change is detected in the negative X-axis direction, but only a small spike quick change is detected for the remaining axes, it can be determined that the player has hit the left side of the operation tool 2. On the other hand, when the player has hit the right side of the operation tool 2, a large spike quick change is detected in the positive X-axis direction, but only a small spike quick change is detected for the remaining axes.

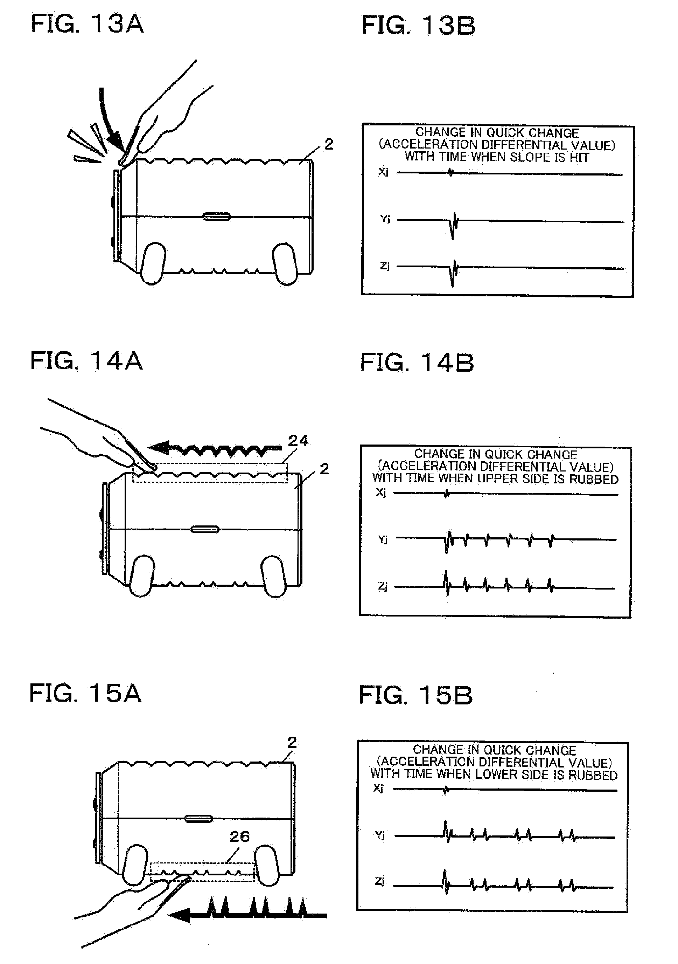

As shown in FIGS. 13A and 13B, when the game controller 1230 is placed in the normal position and a large spike quick change is detected for two axes (the negative Y-axis direction and the negative Z-axis direction in the example shown in FIG. 13B) among the X axis, the Y axis, and the Z axis, but only a small spike quick change is detected for the remaining axis (the X axis in the example shown in FIG. 13B), it can be determined that the player has hit the slope 22. The position (top, bottom, right, or left) of the slope 22 hit by the player can be determined by determining two axes among the X axis, the Y axis, and the Z axis for which a large spike quick change is detected and determining whether the quick change is detected in the positive direction or the negative direction.

When the position of the operation tool 2 is the sideways turned position or the upright position, the positional relationship between the axes for which a spike quick change is detected changes correspondingly.

A rubbing operation position can be determined from the axes for which a quick change is detected and the quick change pattern. As shown in FIGS. 14A and 14B, when the game controller 1230 is placed in the normal position and a spike quick change smaller than a spike quick change that occurs due to a single hitting operation (see FIGS. 10 to 13) is successively detected in the negative Y-axis direction and the positive Z-axis direction, but a quick change is not successively detected for the X axis, it can be determined that the player has rubbed the upper side of the operation tool 2 from the rear side toward the front side, for example. Specifically, it can be determined that the fingertip of the player has moved up and down along the elevation/depression section 24 so that a small quick change has been input successively.

As shown in FIGS. 15A and 15B, when the game controller 1230 is placed in the normal position and a spike quick change smaller than a spike quick change that occurs due to a single hitting operation is successively detected in the positive Y-axis direction and the positive Z-axis direction, but a quick change is not successively detected for the X axis, it can be determined that the player has rubbed the upper side of the operation tool 2 from the rear side toward the front side. Specifically, it can be determined that the fingertip of the player has moved up and down along the elevation/depression section 26 so that a small quick change has been input successively.

The position of the game controller 1230, the hit position, and the rubbed position can thus be determined by determining the triaxial accelerations and occurrence of quick change. Note that the normal position need not necessarily be a position in which the longitudinal direction of the body portion 4 is approximately horizontal. For example, when the character is designed as an animal (e.g., dog), a dog sitting position may be set to be the normal position by setting the front leg portions 6 to be longer than the rear leg portions 6. In this case, since the front end face is higher than the rear end face so that the body portion 4 is tilted, the player can easily hit the front end face.

The above description and the drawings illustrate an example in which the player performs an operation input (e.g., hitting operation or rubbing operation) with his hand (fingers). Note that the player may perform an operation input (e.g., hitting operation or rubbing operation) utilizing a stick-like rod (may be hollow or solid). This also applies to the following description.

### Outline of game

An outline of the music game according to this embodiment is described below. The music game according to this embodiment allows the player to enjoy virtually playing a drum by hitting or rubbing each portion of the operation tool 2 (drum) from the music displayed in the game image.

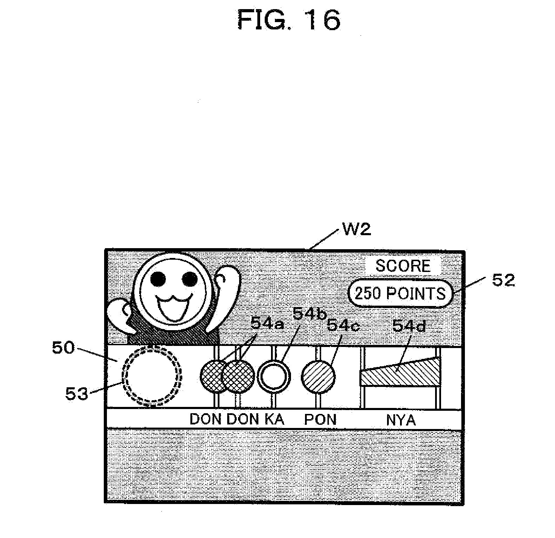

As indicated by an image diagram W2 shown in of FIG. 16, the image display device 1222 of the video monitor 1220 displays a game image in which a music display section 50 and a score display section 52 are synthesized with the background. A timing guide 53 is regularly displayed on the left of the music display section 50. Various note marks 54a, 54b, 54c, and 54d are displayed so that the note marks 54a, 54b, 54c, and 54d sequentially move from the right end of the music display section 50 toward the timing guide 53 with the passage of time.

The note marks 54a, 54b, 54c, and 54d differ in display form (including the color, shape, blink, size, transparency, and the like). A different sound is associated with each display form. Since the motif according to this embodiment is the performance of a Japanese drum, a sound "don" (corresponding to the sound produced when hitting a drumhead) is associated with the note mark 54a, and a sound "ka" (corresponding to the sound produced when hitting a drum body material) is associated with the note mark 54b, for example.

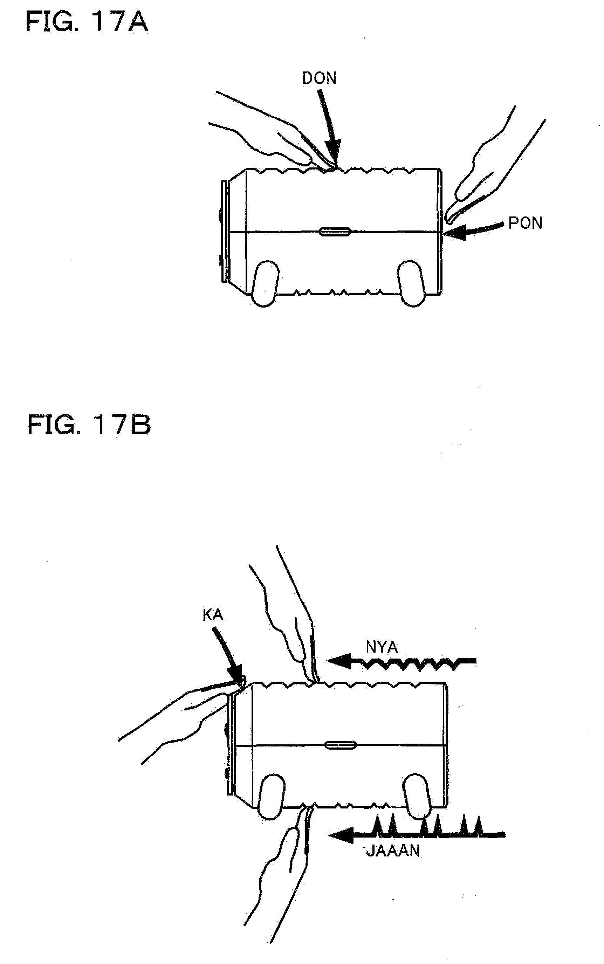

As shown in FIGS. 17A and 17B, the sound associated with the note mark is associated with the corresponding hitting operation position or rubbing operation position of the operation tool 2. For example, the sound "don" associated with the note mark 54a is associated with a hitting operation input performed on the upper side of the operation tool 2 in the normal position, and a sound "pon" associated with the note mark 54c is associated with a hitting operation input performed on the front end face or the rear end face of the operation tool 2 in the normal position.

The player performs an operation input by hitting or rubbing the operation position (operation side) of the operation tool 2 corresponding to the type of the note mark 54 while watching the game image at a timing at which the note mark 54 has entered the timing guide 53. The sound associated with the operation input is then output from the speaker 1224 of the video monitor 1220. The player scores a high point and can play the tune correctly through the game play by performing an operation input corresponding to the type of sound at a correct timing.

### Functional blocks

A functional configuration that implements this embodiment is described below.

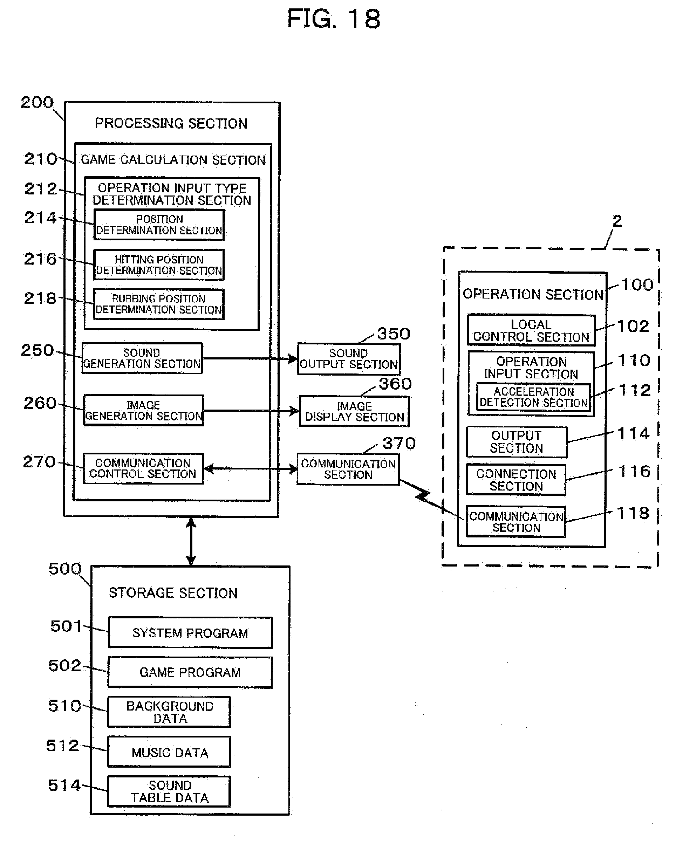

FIG. 18 is a functional block diagram showing a functional configuration example according to this embodiment. As shown in FIG. 18, the consumer game device 1200 according to this embodiment includes an operation section 100, a processing section 200, a sound output section 350, an image display section 360, a communication section 370, and a storage section 500.

The operation section 100 corresponds to the game controller 1230 shown in FIG. 1. The operation section 100 includes a local control section 102, an operation input section 110, an output section 114, a connection section 116, and a communication section 118. The operation input section 110 includes an acceleration detection section 112 that detects the accelerations in three perpendicular axial directions. The operation section 100 is placed in the operation tool 2 when playing the game.

The operation input section 100 is implemented by an input device and a sensor such as a push button, a lever, a touch pad, a dial, a keyboard, a mouse, a pointer, an acceleration sensor, a tilt sensor, a gyrosensor, or a GPS. The operation input section 100 outputs an operation input signal to the processing section 110 corresponding to an input performed by the player. The A button 1232 to the D button 1238, the arrow key 1242, the trigger 1246, and the acceleration sensor 1248 shown in FIG. 2 correspond to the operation input section 100.

The output section 114 is implemented by an output device such as a vibrator, a light, a speaker, a motor, or an image display element. The output section 114 outputs vibrations, light, sound, an operation, an image, or the like corresponding to the game process based on a control signal transmitted from the local control section 102. In the example shown in FIG. 2, the vibrator 1252 and the speaker 1254 correspond to the output section 114.

The connection section 116 is implemented by a connector, for example. The connection section 116 has a mechanism that connects an external signal line to a signal line provided in the operation section 100 and detects the presence or absence of connection. The expansion terminal 1250 and the local bus circuit of the game controller 1230 shown in FIG. 2 correspond to the connection section 116.

The communication section 118 is implemented by an instrument (e.g., wirelesss device or LAN adaptor) for connecting to the communication line 1. The communication section 118 exchanges signals with an external device. The short-distance wireless communication module 1256 shown in FIG. 2 corresponds to the communication section 118. The communication section 118 implements data communication with the communication section 370 that corresponds to the short-distance wireless communication module 1214 (see FIG. 1) of the game device main body 1201.

The local control section 102 is implemented by an electronic component/electronic circuit such as a microprocessor (e.g., a CPU or a bus control IC that controls data communication through a local bus), an application-specific integrated circuit (ASIC), an IC memory, or a local bus. The local control section 102 controls input and output of data to and from each functional section of the operation section 100 using a storage section (not shown) implemented by an IC memory or the like as a work area. The controller control unit 1260 shown in FIG. 2 corresponds to the local control section 102.

The local control section 102 generates an operation input signal based on the operation input signal input from the operation input section 110 and a signal input from the outside through the connection section 116, and transmits the operation input signal to the communication section 370 using the communication section 118.

The processing section 200 is implemented by an electronic component such as a microprocessor (e.g., CPU or GPU), an application-specific integrated circuit (ASIC), or an IC memory. The processing section 200 inputs and outputs data to and from each functional section, and controls the operation of the consumer game device 1200 by performing various calculations based on a given program, data, and the operation input signal from the operation section 100. In FIG. 1, the control unit 1210 provided in the game device main body 1201 corresponds to the processing section 200. The processing section 200 according to this embodiment includes a game calculation section 210, a sound generation section 250, an image generation section 260, and a communication control section 270.

The game calculation section 210 performs a game process. For example, the game calculation section 210 performs a game process (e.g., operation input timing determination or score calculation), a result determination process, and the like. The game calculation section 210 according to this embodiment includes an operation input type determination section 212 that determines the operation input type based on the operation input signal transmitted from the operation section 100.

Specifically, the operation input type determination section 212 includes a position determination section 214 that determines the position of the game controller 1230 based on the triaxial accelerations included in the operation input signal received from the operation section 100, a hit position determination section 216, and a rubbed position determination section 218, the hit position determination section 216 and the rubbed position determination section 218 calculating the quick change value corresponding to each axis based on the triaxial accelerations and determining the hit position and the rubbed position based on the calculated quick change values.

The sound generation section 250 is implemented by a processor such as a digital signal processor (DSP) and its control program, for example. The sound generation section 250 generates a sound signal of game-related effect sound, background music (BGM), or operation sound based on the processing results of the game calculation section 210, and outputs the generated sound signal to the sound output section 350.

The sound output section 350 is implemented by a device that outputs sound such as effect sound or BGM based on the sound signal input from the sound generation section 250. In FIG. 1, the speaker 1224 of the video monitor 1220 corresponds to the sound output section 350.

The image generation section 260 is implemented by a microprocessor such as a GPU or a digital signal processor (DSP), its control program, a drawing frame IC memory such as a frame buffer, or the like. The image generation section 260 generates image signals corresponding to one game image at a given refresh rate (e.g., 1/60th of a second) based on the processing results of the game calculation section 210, and outputs the game image signals to the image display section 360.

The image display section 360 displays various game images based on the image signals input from the image generation section 260. The image display section 360 may be implemented by an image display device such as a flat panel display, a cathode-ray tube (CRT), a projector, or a head mount display. In FIG. 1, the image display device 1222 of the video monitor 1220 corresponds to the image display section 360.

The communication control section 270 performs a data communication process to exchange data with an external device via the communication section 370.

The communication section 370 connects to the communication line 1 to implement communication. The communication section 370 is implemented by a transceiver, a modem, a terminal adapter (TA), a jack for a communication cable, a control circuit, or the like. In FIG. 1, the communication device 1212 and the short-distance wireless communication module 1214 correspond to the communication section 370.

The storage section 500 stores a predetermined program and data and is used as a work area for the processing section 200. The storage section 500 temporarily stores the results of calculations performed by the processing section 200 according to various programs, for example. The function of the storage section 500 is implemented by an IC memory (e.g., RAM, ROM, or EEPROM), a magnetic disk (e.g., hard disk), or an optical disk (e.g., CD-ROM, DVD-RAM, or MO), for example.

The storage section 500 according to this embodiment stores a system program 501 that implements a function of causing the processing section 200 to control the game device 1200, a game program 502 and data necessary for causing the processing section 200 to execute the game, and the like. The function of the game calculation section 210 may be implemented by the processing section 200 by causing the processing section 200 to read and execute the game program 502.

The storage section 500 also stores background data 510, music data 512, and sound table data 514 as data provided in advance.

The background data 510 is data for displaying the background of the game image. The background data 510 may be still picture data, for example. When displaying an image by 3D CG, the background data 510 may include model data, texture data and motion data applied to a model, setting data relating to the photographing position and the line-of-sight direction of a virtual camera, and the like.

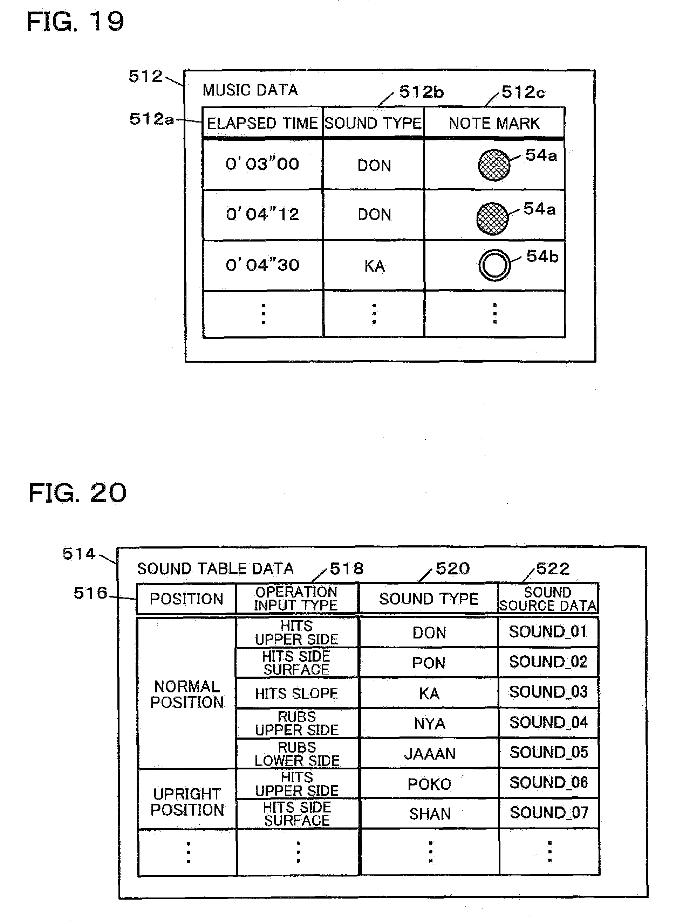

The music data 512 defines the type of sound that should be input corresponding to the time elapsed after starting to display the music. As shown in FIG. 19, an elapsed time 512a, a input sound type 512b, and a note mark 512c are associated and stored as the music data 512, for example.

As shown in FIG. 20, a sound type 520 and sound source data 522 are stored as the sound table data 514 corresponding to the combination of a position 516 of the game controller 1230 and an operation input type 518, for example. For example, when the game controller 1230 is placed in the normal position and the player has hit the slope 22, it is determined that an input corresponding to the sound type "ka" has been performed. Therefore, the sound generation section 250 generates a sound signal based on sound source data "SOUND_03", and the sound output section 350 reproduces and outputs the sound.

### Process flow

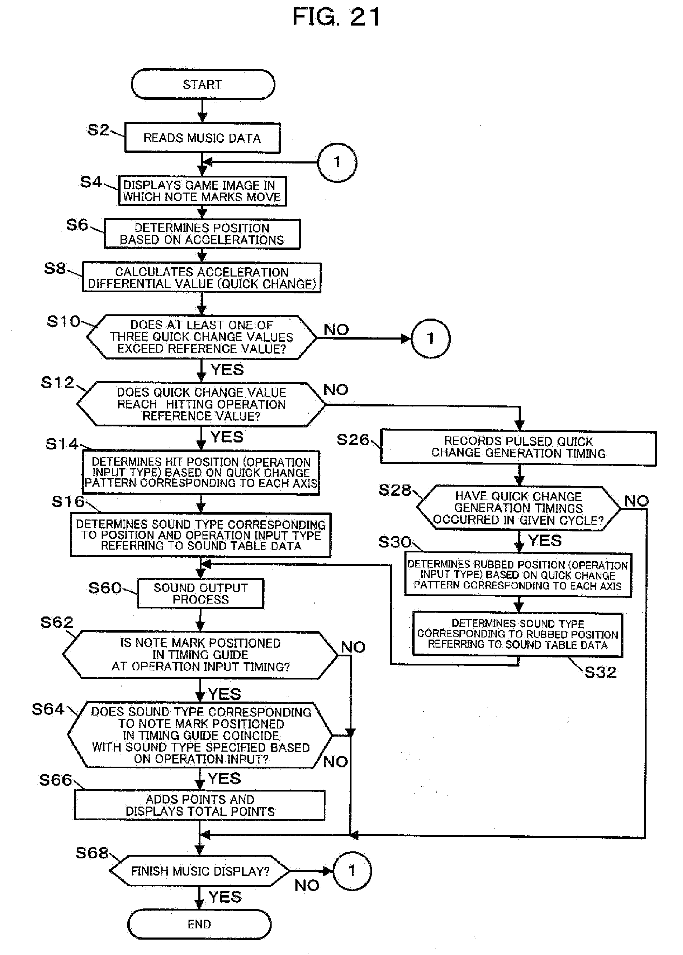

FIG. 21 is a flowchart illustrative of the flow of the process according to this embodiment. As shown in FIG. 21, the control unit 1210 reads the music data 512 (step S2), and displays a game image in which the note marks 54 move (step S4; see FIG. 16).

The control unit 1210 then determines the position of the game controller 1230 based on the triaxial accelerations detected by the acceleration sensor 1248 (step S6; see FIGS. 7 to 9), and calculates the quick change value corresponding to each axis by differentiating the triaxial accelerations (step S8).

When at least one of the three quick change values thus calculated exceeds a given reference value that differentiates noise from a hitting/rubbing operation (i.e., a sufficiently large quick change value that can be determined to be caused by an impact due to hitting or rubbing on the elevation/depression sections 24 and 26 has been detected) (YES in step S10), the control unit 1210 determines whether or not the quick change value corresponds to a hitting operation input (step S12).

When the control unit 1210 has determined that the quick change value corresponds to a hitting operation input (YES in step S12), the control unit 1210 determines the hit position (=operation input type) based on the quick change pattern corresponding to each axis (step S14; see FIGS. 10 to 13).

The control unit 1210 then determines the sound type corresponding to the combination of the position of the game controller 1230 and the operation input type thus determined referring to the sound table data 514 (step S16), and performs a sound output process based on the sound source data so that the speaker 1224 outputs the sound (step S60).

When the control unit 1210 has determined that the quick change value does not correspond to a hitting operation input, but satisfies the rubbing operation input standard (NO in step S12), the control unit 1210 records the quick change generation timing (step S26). Specifically, the control unit 1210 records a change in quick change over a given period of time. When the quick change generation timings have occurred in a given cycle that coincides with a given rubbing pattern (YES in step S28), the control unit 1210 determines the rubbed position (operation input type) based on the quick change pattern corresponding to the three axes (step S30).

The control unit 1210 then specifies the sound type associated with the position of the game controller 1230 and the rubbed position (operation input type) thus determined referring to the sound table data 514 (step S32), and performs the sound output process based on the sound source data so that the speaker 1224 outputs the sound (step S60).

After the sound output process, the control unit 1210 determines whether or not the note mark 54 is positioned in the timing guide 53 in the game image at the timing at which the hitting operation input or the rubbing operation input has been performed (step S62). Specifically, the control unit 1210 determines whether or not the sound type is defined in a reference range around the operation input timing referring to the music data 512, and determines that the note mark 54 is positioned in the timing guide 53 when the sound type is defined in the reference range. When the note mark 54 is positioned in the timing guide 53 (YES in step S62), the control unit 1210 adds points when the sound type corresponding to the note mark positioned in the timing guide 53 coincides with the sound type specified based on the operation input (YES in step S64), and displays the total points in the game image (step S66).

The control unit 1210 returns to the step S4 when the music corresponding to one tune has not been displayed (NO in step S68). When the music corresponding to one tune has been displayed (YES in step S68), the control unit 1210 finishes the process to finish the game.

According to this embodiment, since the game controller 1230 is placed in the operation tool 2 during use, the player does not directly hit the game controller 1230 even if the player performs a hitting operation input as if to play a drum. Therefore, damage to or a breakdown of the game controller 1230 can be prevented. Since only vibrations of the lower-order component of the impact due to a hitting operation are transmitted to the game controller 1230 due to the appropriate impact buffer effect of the operation tool 2 so that undesired noise and a pulsed change in acceleration due to the hitting operation input can be easily separated, the operation input detection accuracy can be improved.

Since the operation tool 2 is configured so that the normal position is specified by the leg portions 6, the upward/downward direction and the forward/backward direction are indicated by providing the face portion 10, and the game controller 1230 is placed in the operation tool 2 only in a given relative position due to the fitting sections 18a and 18b, the player can perform a desired operation input even if the player cannot observe the game controller 1230.

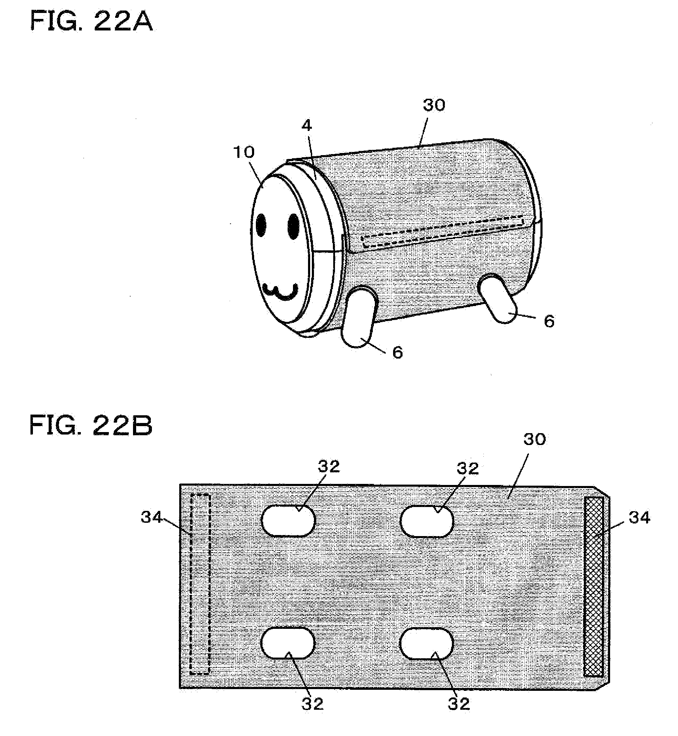

In this embodiment, the body portion 4 is formed of a buffer material. In order to further improve the buffering properties so that the player can perform an operation input without feeling pain, a buffer sheet 30 (e.g., neoprene, fur, sponge sheet, or air cushion sheet) may be wound around the body portion 4, as shown in FIGS. 22A and 22B. It is preferable that the buffer sheet 30 be removable by providing through-holes 32 for the leg portions 6 and stopper hook-and-loop fasteners 34, as shown in FIGS. 22A and 22B. Note that the buffer sheet 30 may be removably attached or bonded to the periphery of the body portion 4.

The game controller 1230 and the game device main body 1210 may communicate via cable communication instead of wireless communication.

### Second embodiment

A second embodiment to which the invention is applied is described below. The configuration according to this embodiment is basically the same as the configuration according to the first embodiment, but differs from the configuration according to the first embodiment as to the configuration of the operation tool. The following description focuses on only the configuration of the operation tool. The same elements as the elements according to the first embodiment are indicated by the same symbols. Description of these elements is omitted.

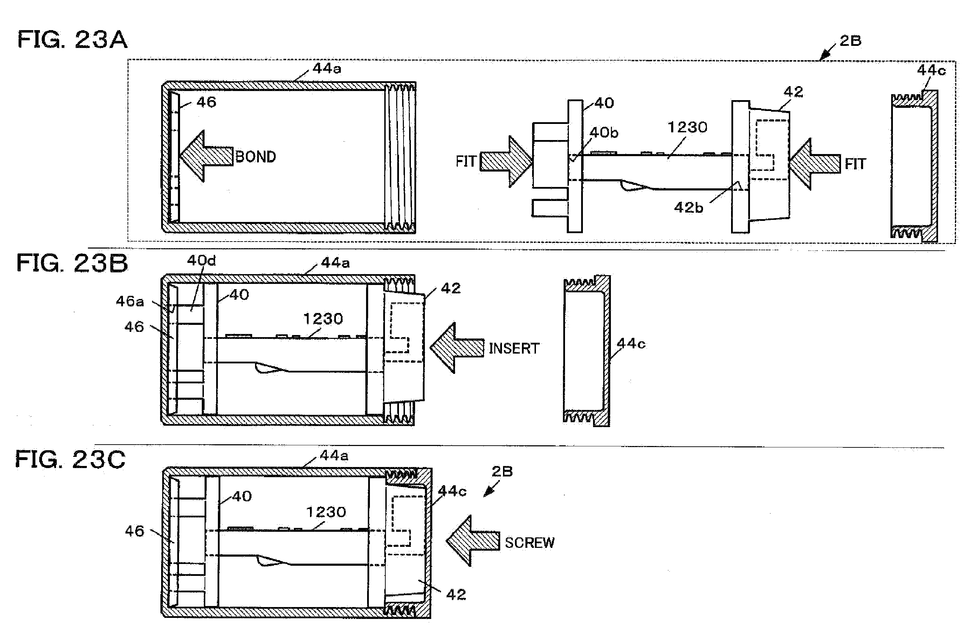

FIGS. 23A to 23C are partial cross-sectional views showing the structure and the assembling process of an operation tool 2B according to this embodiment. The operation tool 2B according to this embodiment includes a removable first buffer material 40 into which the front end of the game controller 1230 is fitted tightly, a removable second buffer material 42 into which the rear end of the game controller 1230 is fitted tightly, an outer shell 44 (having elements 44a and 44b) that forms a bottomed inner space that receives the first buffer material 40 and the second buffer material 42, and a positioning plate 46 that is secured on the bottom of the outer shell 44 and secures the first buffer material 40 to have a given relative positional relationship with the outer shell 44.

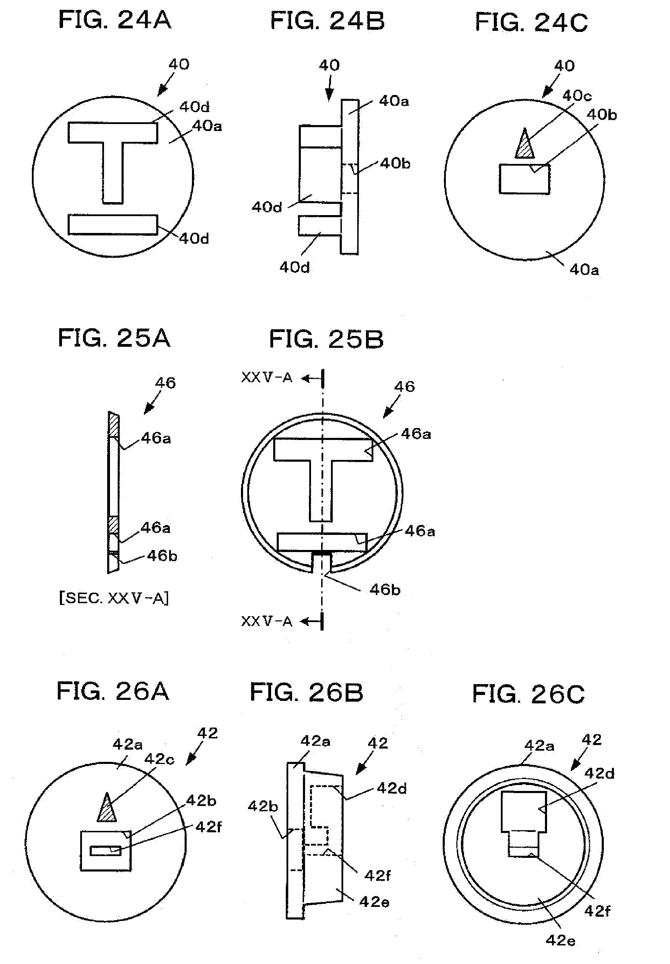

The first buffer material 40 is formed of a material similar to that of the body portion 4 according to the first embodiment. As shown in FIGS. 24A to 24C, the first buffer material 40 includes a disk-shaped base plate 40a having an external shape that is tightly fitted into the inner space of the outer shell 44, a bottomed depression 40b into which the front end of the game controller 1230 is fitted tightly, and a fit position indicator 40c that indicates the direction of the operation side of the game controller 1230, the depression 40b and the fit position indicator 40c being formed on one side of the base plate 40a. A buffer pillar 40d protrudes from the other side of the base plate 40a. The end of the buffer pillar 40d is shaped to be tightly fitted into a depression 46a in the positioning plate 46 shown in FIGS. 25A and 25B.

The second buffer material 42 is formed of a material similar to that of the body portion 4 according to the first embodiment. As shown in FIGS. 26A to 26C, the second buffer material 42 includes a disk-shaped base plate 42a having an external shape that is tightly fitted into the inner space of the outer shell 44, a bottomed depression 42b into which the rear end of the game controller 1230 is fitted tightly, and a fit position indicator 42c that indicates the direction of the operation side of the game controller 1230, the depression 42b and the fit position indicator 42c being formed on one side of the base plate 42a. A buffer block 42e in which an auxiliary receiving section 42d is formed is provided on the other side of the base plate 42a. The base plate 42a may be referred to as a flange on the front end of the buffer block 42e. The bottom of the depression 42b and the auxiliary receiving section 42d communicate through a passage 42f.

The strap 1270 attached to the rear end of the game controller 1230 is placed in the auxiliary receiving section 42d through the passage 42f. Note that a through-hole may be formed in the outer shell 44 at a position opposite to the passage 42f, and the strap 1270 may be exposed to the outside.

The outer shell 44 functions as a shell of the operation tool 2 and is formed of a hard resin, wood, or the like that transmits radio waves.

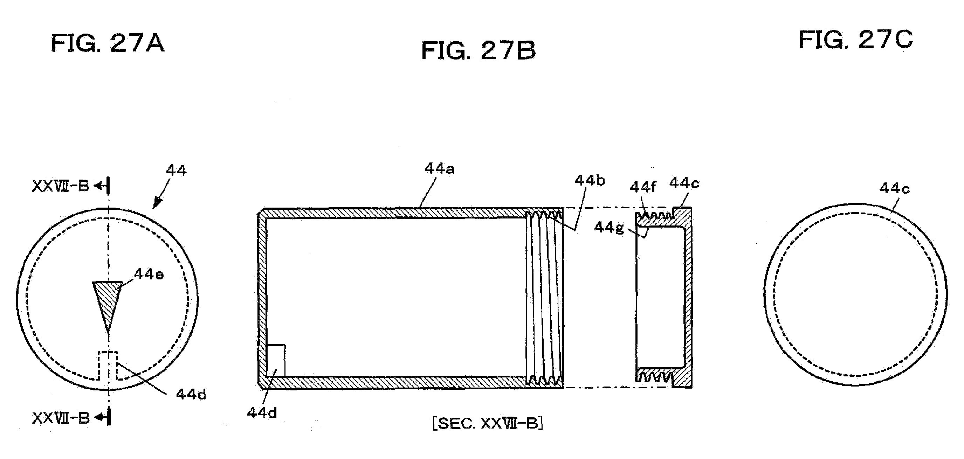

As shown in FIGS. 27A to 27C, the outer shell 44 includes a deep bottomed cylindrical portion 44a, a threaded portion 44b provided over the inner circumference of the opening of the cylindrical portion 44a, and a shallow bottomed cap portion 44c screwed into the threaded portion 44b. When the cap portion 44c is screwed into the cylindrical portion 44a, an inner space that tightly receives the game controller 1230 that is fitted into the first buffer material 40 and the second buffer material 42.

A protrusion 44d is partially formed on the bottom of the cylindrical portion 44a. The protrusion 44d is fitted into a cut portion 46b of the positioning plate 46 to function as a relative position specifying section when securing the positioning plate 46. An indicator 44e that indicates the position at which the protrusion 44d is provided, is provided on the outer side of the bottom of the cylindrical portion 44a. In the example shown in FIG. 27A, an arrow in the shape of an isosceles triangle indicates the position at which the protrusion 44d is provided.

The diameter of a threaded portion 44f of the cap portion 44c is set to be smaller than the diameter of the base plate 42a of the second buffer material 42. A depression 44g into which the buffer block 42e of the second buffer material 42 can be fitted is formed in the cap portion 44c.

The assembling process is as follows. As shown in FIG. 23A, the positioning plate 46 is bonded to the bottom of the cylindrical portion 44a of the outer shell 44 so that the protrusion 44d is fitted into the cut portion 46b. The positioning plate 46 may be bonded by the manufacturer of the operation tool 2B.

The front end of the game controller 1230 is fitted into the depression 40b of the first buffer material 40, and the rear end of the game controller 1230 is fitted into the depression 42b of the second buffer material 42 to obtain an integrally assembled product.

As shown in FIG. 23B, the assembled product is then inserted into the cylindrical portion 44a from the first buffer material 40, and is pushed until the end of the buffer pillar 40d is fitted into the depression 46a of the positioning plate 46. The peripheral portions of the base plates of the first buffer material 40 and the second buffer material 42 are tightly fitted to the inner circumference of the cylindrical portion 44a.

The cap portion 44c is then installed, as shown in FIG. 23C. The end of the threaded portion 44f or the bottom of the depression 44g of the cap portion 44c comes in contact with and presses the edge of the second buffer material 42 or the rear end face of the buffer block 42e so that the movement of the game controller 1230 or the like is suppressed.

The player utilizes the cylindrical operation tool 2B thus completed for playing the game in the same manner as the operation tool 2 according to the first embodiment.

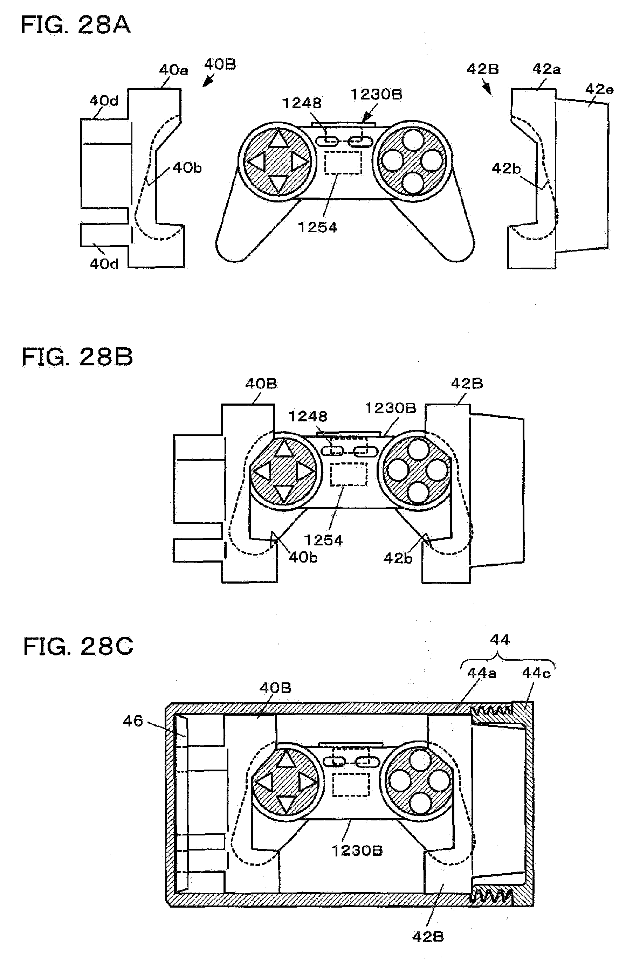

As shown in FIGS. 28A to 28C, it is possible to deal with a game controller 1230B of another consumer game device utilizing identical parts such as the outer shell 44 and the positioning plates 46 by designing the shape of the depression 40b of the first buffer material 40B and the shape of the depression 42b of the second buffer material 42B corresponding to the shape of the placement target game controller. Note that the game controller 1230B must include the acceleration sensor 1248 and have a function of transmitting the triaxial accelerations detected by the acceleration sensor 1248 to the game device main body 1201 via the short-distance wireless communication module 1256.

The buffer sheet according to the first embodiment may be provided around the operation tool so that the player can hit the outer shell 44 without pain. A portion corresponding to the leg portion 6 according to the first embodiment may be provided on the outer shell 44, and may be held by the player during game play.

### Third embodiment

A third embodiment to which the invention is applied is described below. The configuration according to this embodiment is basically the same as the configuration according to the first embodiment, but differs from the configuration according to the first embodiment in that the operation tool is configured in a different manner and a filtering process is performed when outputting sound corresponding to the inclination of the game controller 1230. The following description focuses on only the difference from the first embodiment. The same elements as the elements according to the first embodiment are indicated by identical symbols. Description of these elements is omitted.

### Structure of operation tool

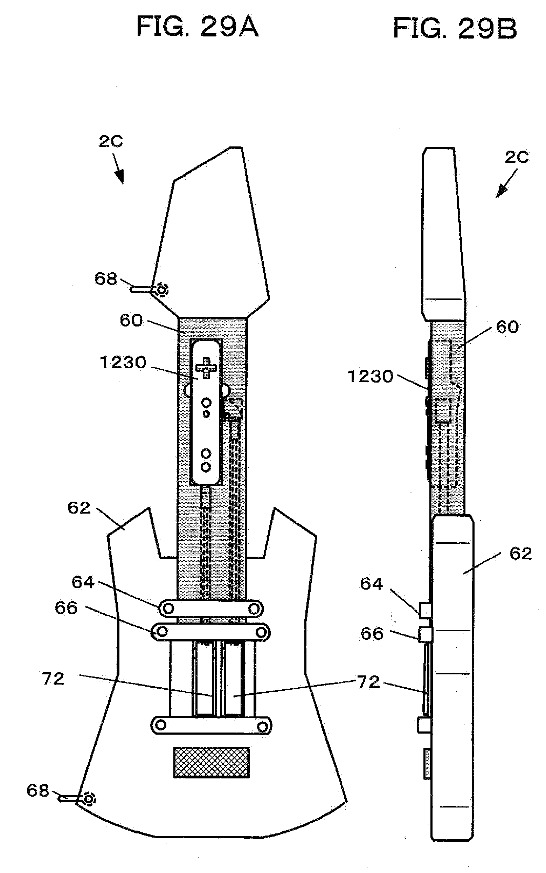

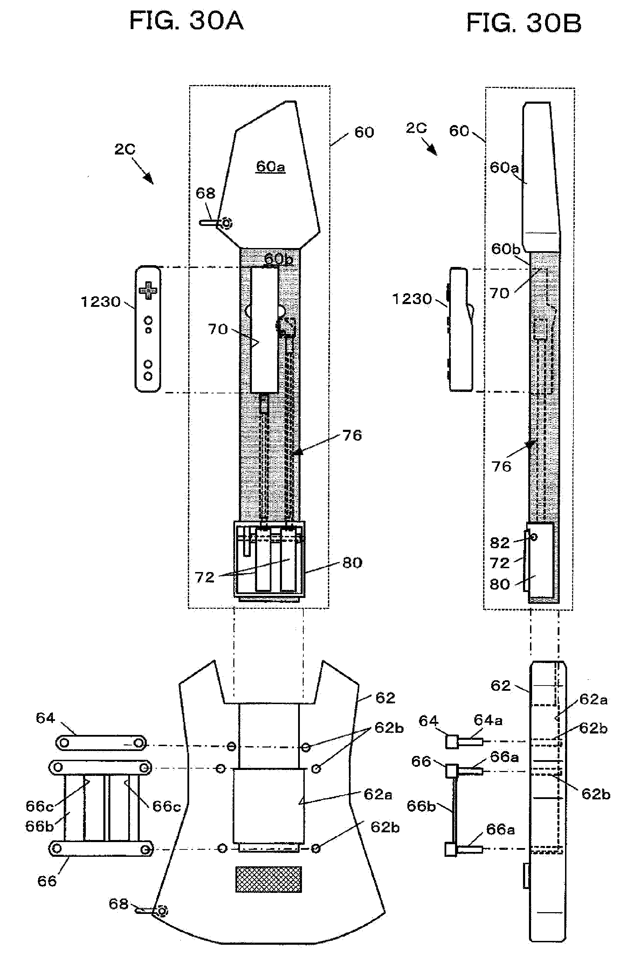

FIGS. 29A and 29B are views showing the appearance and the configuration of an operation tool 2C according to this embodiment. FIGS. 30A and 30B are exploded views showing the operation tool 2C. The operation tool 2C according to this embodiment is generally designed as a guitar in which a neck portion 60, a body portion 62, a first connector 64, and a second connector 66 are joined so that these elements can be disassembled. Specifically, the operation tool 2C according to this embodiment is used as a virtual guitar (virtual musical instrument).

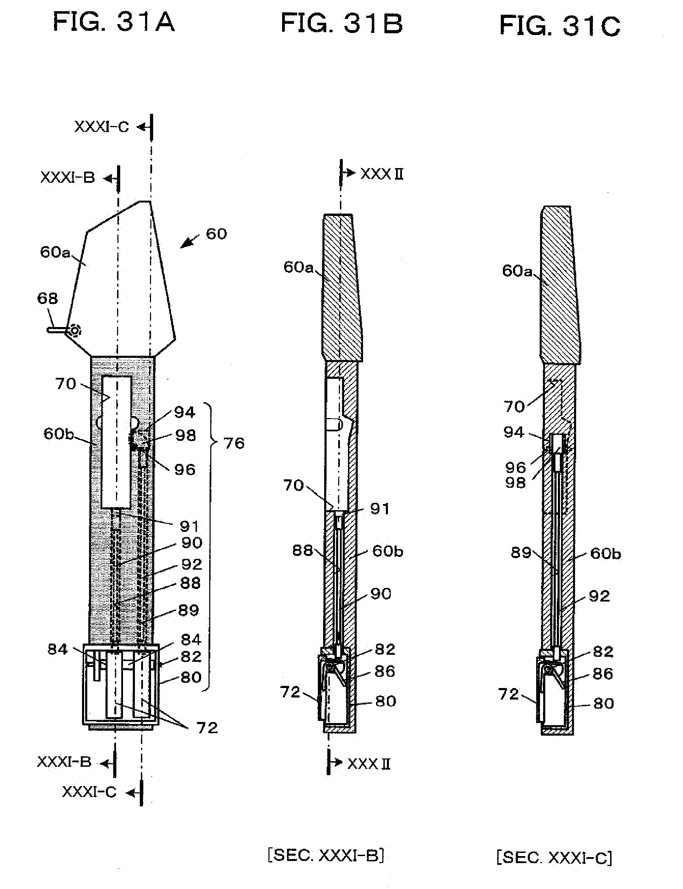

The neck portion 60 is formed of a material similar to that of the body portion 4 according to the first embodiment. As shown in FIGS. 30A and 30B and FIGS. 31A to 31C, an end portion 60a of the neck portion 60 is provided with a strap holder 68. A fitting section 70 (bathtub-shaped depression into which the game controller 1230 is fitted tightly) is provided on the front side (upper side in the drawings) of a neck main body 60b. Operation keys 72 for performing a hitting operation input are provided on the rear side of the neck main body 60b. In this embodiment, since the fitting section 70 is in the shape of a bathtub, the game controller 1230 is fitted so that the operation side is exposed.

A transmission mechanism 76 that transmits the operation (force) of the operation keys 72 to the game controller 1230 fitted into the fitting section 70 is provided in (through) the neck main body 60b.

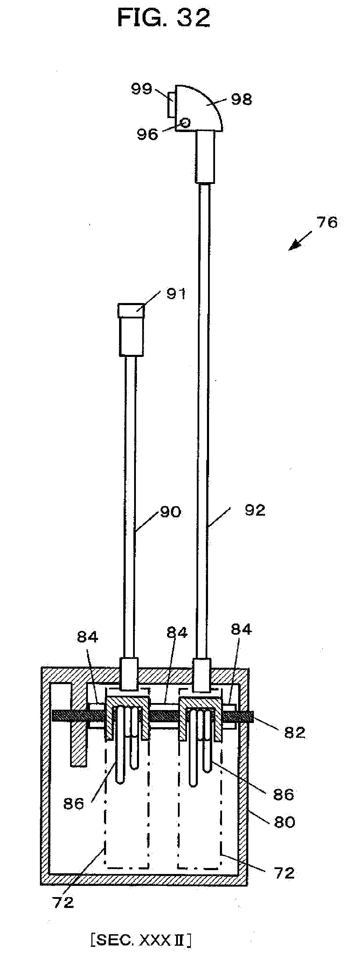

As shown in FIGS. 31A to 31C and FIG. 32, the transmission mechanism 76 includes a casing 80, transmission rods 90 and 92, and a knocker 98.

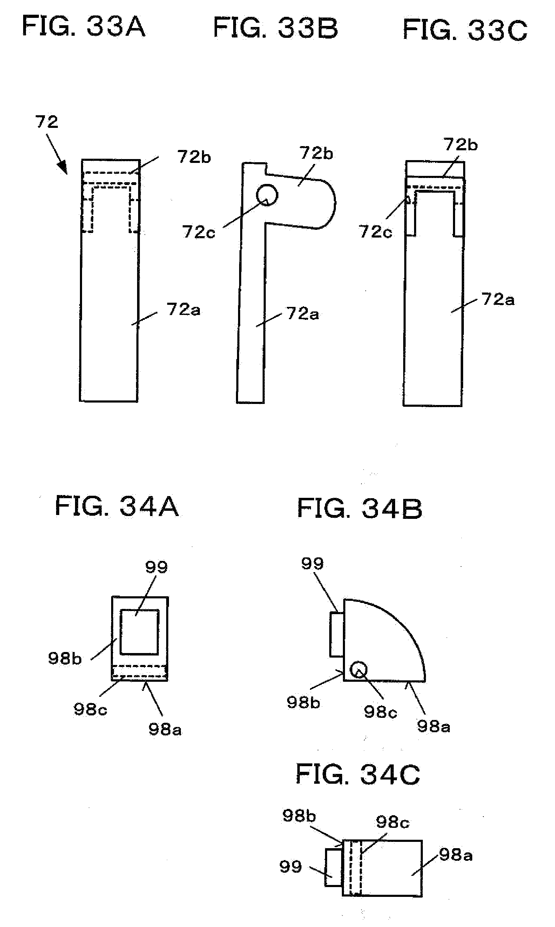

The casing 80 is a bottomed housing of which one side is open and which is formed of a hard resin or the like. The casing 80 is secured on the rear side of the neck main body 60b. A shaft 82 is secured on the right side and the left side of the casing 80. The operation keys 72 are supported by the shaft 82 so that the operation keys 72 can swing. As shown in FIGS. 33A to 33C, the operation key 72 is configured so that a knock piece 72b extends from the back side of the end of a key main body 72a subjected to a hitting operation, and the shaft 82 is inserted into an insertion hole 72c formed in the knock piece 72b. The interval between the operation keys 72 is maintained by a collar 84. A hair spring 86 is attached to the back side of each operation key 72 so that the operation key 72 is biased in the direction opposite to the bottom of the casing 80 and is secured in a state in which the front end face (end face in FIG. 33A) of the key main body 72a comes in contact with the inner side of the casing 80.

Two through-holes 88 and 89 into which the transmission rods 90 and 92 are respectively inserted are formed in the neck main body 60b. The through-hole 88 is formed from the inner wall surface of the rear side of the fitting section 70 that receives the game controller 1230 to the inner wall surface of the front side of the casing 80. The transmission rod 90 inserted into the through-hole 88 has such a length that the rear end face of the transmission rod 90 protrudes to only a small extent in the casing 80 at a position forward of the knock piece 72b of the left operation key 72 when the front end face is placed at the same position as the inner wall surface of the rear side of the fitting section 70. A buffer material 91 is attached to the front end of the transmission rod 90.

The through-hole 89 is formed from the inner wall surface of the rear side of a knocker receiving space 94 formed outward in the inner wall of the fitting section 70 to the inner wall surface of the front side of the casing 80. The transmission rod 92 inserted into the through-hole 89 has such a length that the rear end face of the transmission rod 92 protrudes to only a small extent in the casing 80 at a position forward of the knock piece 72b of the right operation key 72 when the front end face is placed at the same position as the inner wall surface of the rear side of the knocker receiving space 94.

The knocker 98 is supported in the knocker receiving space 94 by a shaft 96 that is inserted into the neck main body 60b from the front side to the back side so that the knocker 98 can swing.

As shown in FIGS. 34A to 34C, the knocker 98 includes a contact side 98a that comes in contact with the end of the transmission rod 92, a hit side 98b perpendicular to the contact side 98a, and an insertion hole 98c for the shaft 96 provided parallel to the intersection of the contact side 98a and the hit side 98b. A buffer material 99 is attached to the hit side 98b. The knocker 98 is supported in the knocker receiving space 94 so that the buffer material 99 faces the right inner side of the fitting section 70.

Again referring to FIGS. 29A and 29B and FIGS. 30A and 30B, the body portion 62 corresponds to a resonator of a guitar, and includes a depression 62a into which the rear side of the neck portion 60 is fitted tightly and which is formed in the front side of the body portion 62, and a strap holder 68.

The first connector 64 and the second connector 66 secure the rear side of the neck portion 60 fitted into the body portion 62, and respectively include pins 64a and 66a provided on one side. The pins 64a and 66a are tightly fitted into fitting holes 62b formed in the front side of the body portion 62. The second connector 66 includes a plate 66b that covers the casing 80. Insertion holes 66c into which the operation keys 72 are inserted are formed in the plate 66b.

The neck portion 60 is fitted into the body portion 62, and is secured using the first connector 64 and the second connector 66 to complete the operation tool 2C.

### Operation input method

The player holds the operation tool 2C as if to hold a guitar. Specifically, the player holds the operation tool 2C in the left direction while supporting the neck portion 60 with the left hand and placing the right hand on the operation keys 72. The player places the fingers of the left hand on the A button 1232, the 1 button 1236, and the 2 button 1238 of the game controller 1230. Therefore, the operation tool 2C according to this embodiment is placed in a normal position when the operation (play) side (corresponding to the front side in FIG. 29A) faces sideways and the front end faces leftward.

In this case, the acceleration corresponding to the gravitational acceleration is always detected in the negative X-axis direction. The Y-axis acceleration and the Z-axis acceleration are basically about zero if noise due to the body movement of the player is excluded. Therefore, the directions of the operation side and the front end of the operation tool 2C can be determined from the triaxial accelerations in the same manner as the position determination according to the first embodiment.

In this embodiment, twelve operation inputs in total can be performed by changing the combination of the ON/OFF states of the A button 1232, the 1 button 1236, and the 2 button 1238 and determining the operation key 72 for which a change in acceleration is detected. A different sound is associated with each operation input.

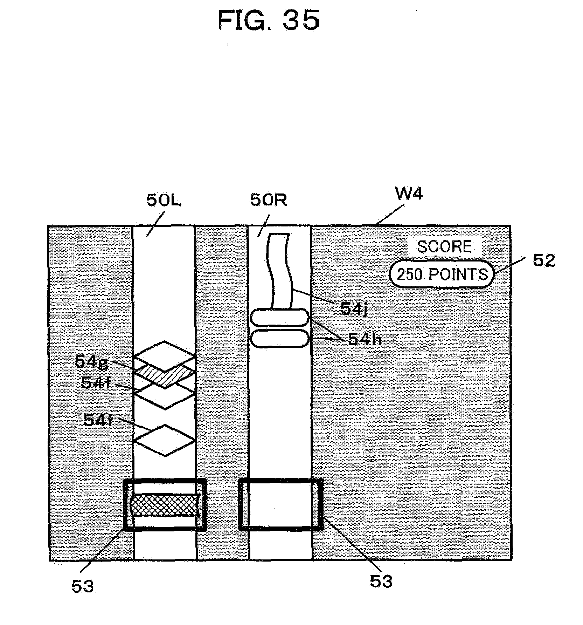

As shown in FIG. 35, a game image W4 in which two music display sections 50R and 50L are displayed and twelve types of note marks 54f, 54g, 54h, and 54j move downward is displayed on the video monitor 1220, for example. For example, the note mark displayed in the left music display section 50L basically indicates a sound type based on the combination of the ON/OFF states of the A button 1232, the 1 button 1236, and the 2 button 1238 and the left operation key 72, and the note mark displayed in the right music display section 50R basically indicates a sound type based on the combination of the ON/OFF states of the A button 1232, the 1 button 1236, and the 2 button 1238 and the right operation key 72. The note mark 54j common to the music display sections 50R and 50L is a note mark that instructs the player to tilt the operation tool 2C. For example, the note mark 54j instructs the player to hold the operation tool 2C (virtual guitar) so that the play side (operation side) faces upward, or instructs the player to hold the operation tool 2C (virtual guitar) so that the neck faces upward.

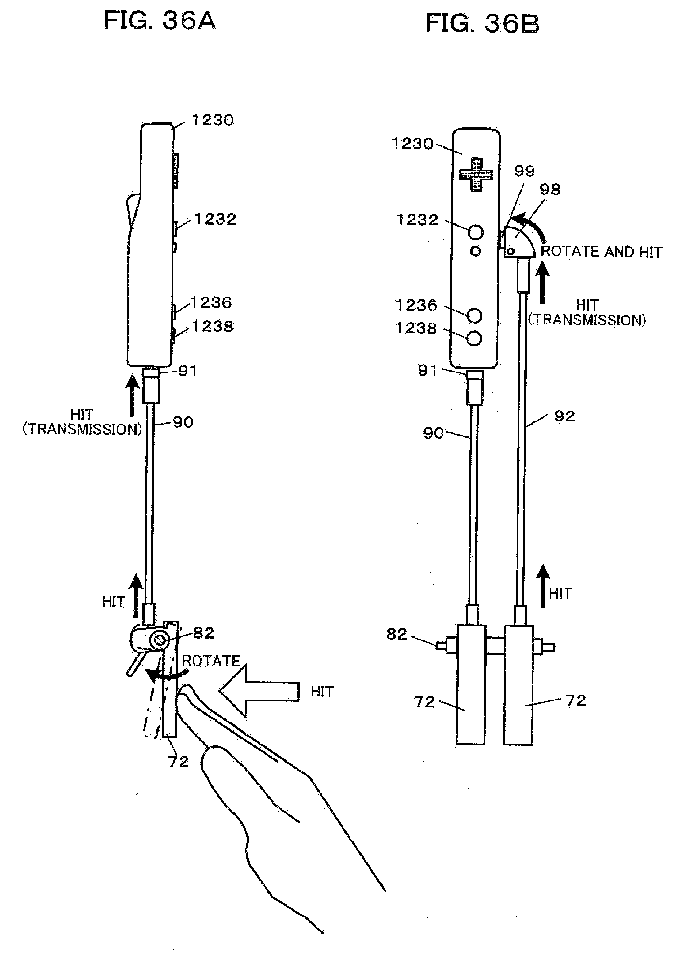

The player hits the operation key 72 with the right hand while watching the music displayed in the game image and operating the buttons with the left hand. As shown in FIGS. 36A and 36B, when the player has hit the operation key 72, the operation key 72 is rotated around the shaft 82 so that the knock piece 72b hits the rear end face of the transmission rod 90 or 92 that protrudes into the casing 80. The front end of the transmission rod 90 or 92 transmits the impact.

For example, since the front end face of the transmission rod 90 faces the fitting section 70, the front end face of the transmission rod 90 hits the rear end face of the game controller 1230 through the buffer material 91. Specifically, the impact (force) that occurs when the player has hit the operation key 72 is transmitted by the transmission rod 90 in a different direction, and the acceleration sensor 1248 detects a change (quick change) in acceleration in the positive Z-axis direction.

On the other hand, since the front end face of the transmission rod 92 is in contact with the rear end face of the knocker 98, the front end face of the transmission rod 92 causes the knocker 98 to be rotated around the shaft 96. As a result, the knocker 98 hits the right side of the game controller 1230 through the buffer material 99. Specifically, the impact (force) that occurs when the player has hit the operation key 72 is transmitted by the transmission rod 92 and the knocker 98 in a different direction, and the acceleration sensor 1248 detects a change (quick change) in acceleration in the positive X-axis direction.

Therefore, the control unit 1210 can determine the operation input type determining the combination of the ON/OFF states of the A button 1232, the 1 button 1236, and the 2 button 1238 and whether a change (quick change) in acceleration has been detected corresponding to the X axis or the Z axis.

### Process flow

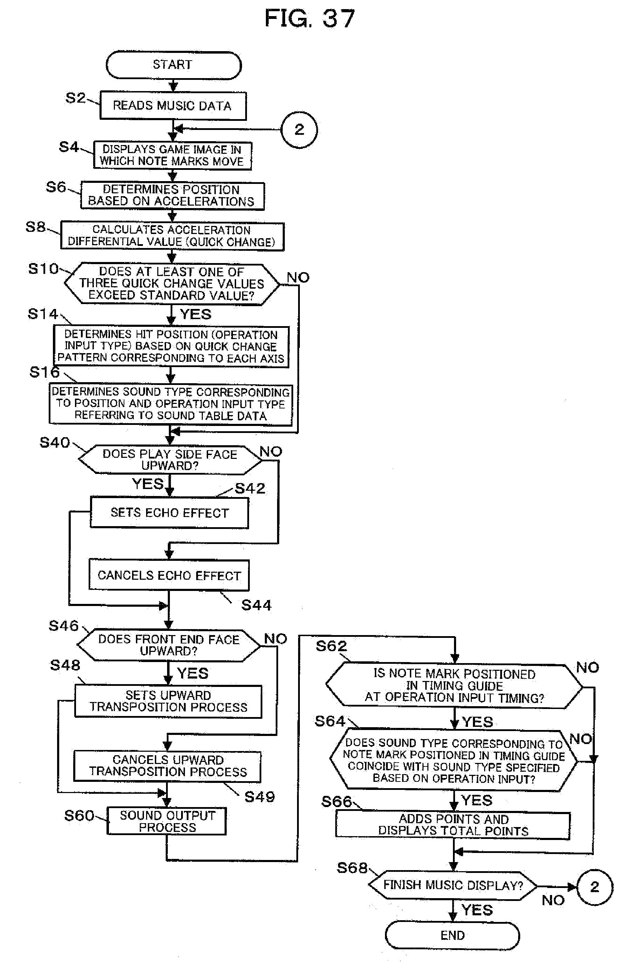

FIG. 37 is a flowchart illustrative of the flow of the process according to this embodiment. The flow of the process according to this embodiment is basically the same as the flow of the process according to the first embodiment, except that (1) the step S12 is omitted since the rubbing operation input employed in the first embodiment is not set, and (2) steps S40 to S49 are performed instead of the steps S28 to S32 when the determination result in the step S10 is NO and after the step S16.

In the step S40, the control unit 1210 determines whether or not the play side (corresponding to the front side in FIG. 29A) of the operation tool 2C faces upward based on the X-axis acceleration and the Y-axis acceleration. When the control unit 1210 has determined that the play side faces upward (YES in step S40), the control unit 1210 sets an echo effect process that is one of sound filtering processes (correction processes) (step S42). When the control unit 1210 has determined that the play side does not face upward (NO in step S40), the control unit 1210 cancels the echo effect process (step S44). Specifically, the control unit 1210 sets a flag that indicates the presence or absence of the echo effect process in the storage section 500.

The control unit 1210 then determines whether or not the front end of the operation tool 2C faces upward based on the Y-axis acceleration and the Z-axis acceleration (step S46). When the control unit 1210 has determined that the front end of the operation tool 2C faces upward (YES in step S46), the control unit 1210 sets an upward transposition process that is one of the sound filtering processes (step S48). When the control unit 1210 has determined that the front end of the operation tool 2C does not face upward (NO in step S46), the control unit 1210 cancels the echo effect process (step S49). Specifically, the control unit 1210 sets or cancels a flag that indicates that the upward transposition process (i.e., a process that increases the pitch by a given tone) is applied.

The control unit 1210 then performs the sound output process (step S60). In this case, the control unit 1210 performs the echo effect process on the output target sound when the echo effect process is set, and increases the output target pitch by a given tone when the upward transposition process is set.

According to this embodiment, the same effects as in the first embodiment can be achieved even if the hitting operation input position is away from the game controller 1230. Since sound subjected to the filtering process corresponding to the position of the operation tool 2C can be output, the player can enjoy a variety of virtual performance.

The configuration of the operation tool in which the hitting operation input position is set to be away from the game controller 1230 is not limited to the configuration according to this embodiment.

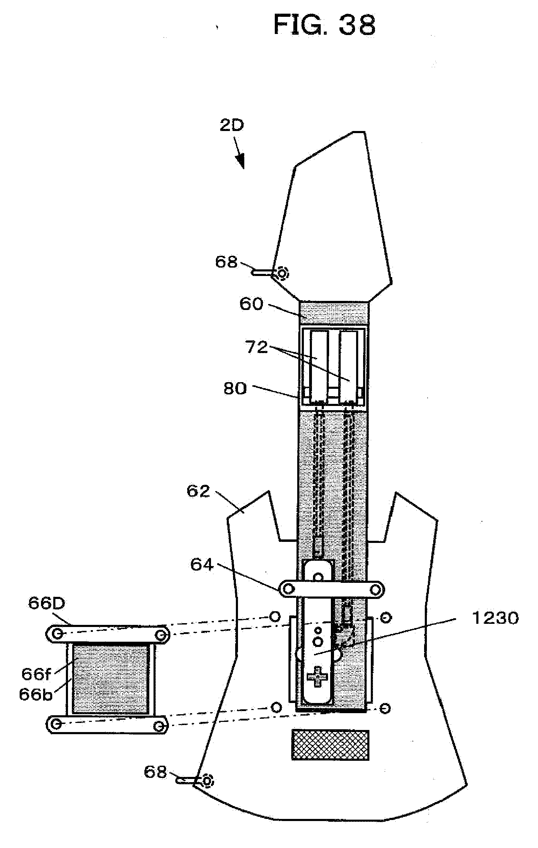

For example, a configuration in which the positions of the game controller 1230 and the operation keys 72 are reversed (see operation tool 2D shown in FIG. 38) may also be employed. In this case, it is desirable to attach a buffer sheet 66f to at least the back side (i.e., the side opposite to the game controller 1230) of the plate 66b of the second connector 66D (more preferably the back side and the front side) so that the player does not directly hit the game controller 1230. The fitting section 70 may not be provided on the rear side of the neck portion 60, but may be provided in the body portion 62.

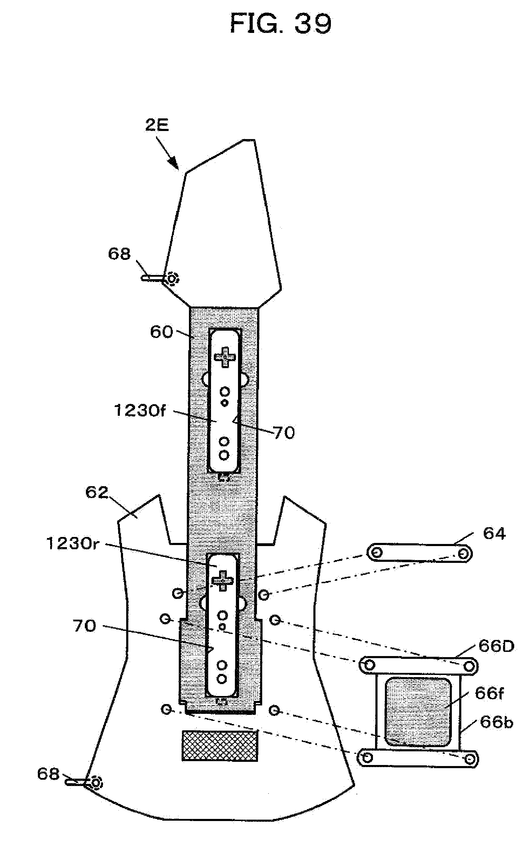

When a plurality of game controllers 1230 can be used, game controllers 1230f and 1230r may be respectively fitted into the front side and the rear side of the neck portion 60 (see operation tool 2E shown in FIG. 39). In this case, the combination of the ON/OFF states of the A button 1232, the 1 button 1236, and the 2 button 1238 may be determined based on the operation input signal from the game controller 1230f fitted into the front side of the neck portion 60. The position of the operation tool 2E may be determined based on the triaxial accelerations from the game controller 1230f, and a hitting operation input may be determined based on the triaxial accelerations from the game controller 1230r fitted into the rear side of the neck portion 60. Alternatively, a hitting operation input may be determined based on the sum of quick changes detected by each game controller. The game controllers fitted into the front side and the rear side of the neck portion 60 may not be identical (i.e., one of the game controllers may be a sub-controller connected to the other game controller via a cable).

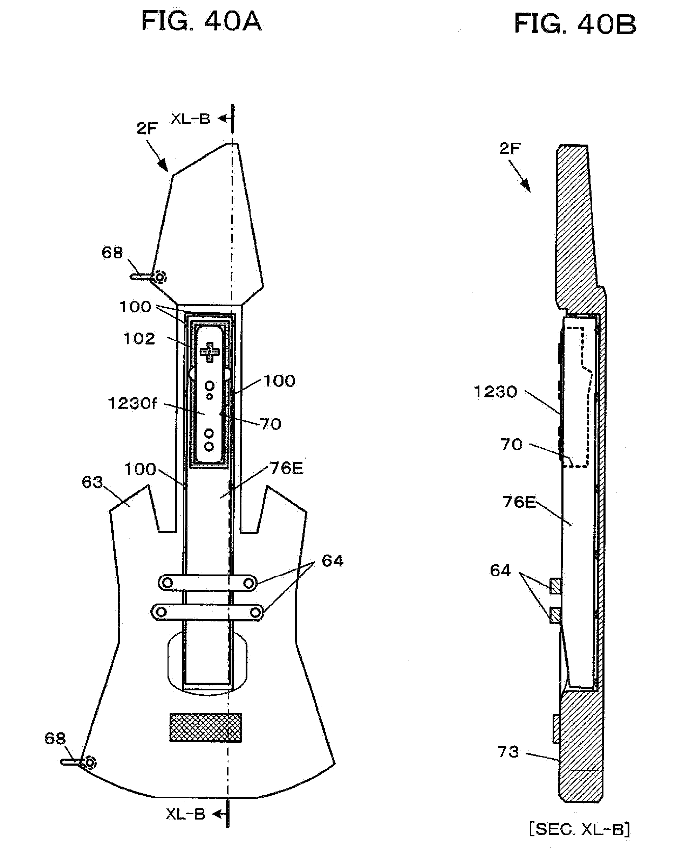

The transmission mechanism 76 may be configured so that a conductive plate 76E formed of a hard resin or the like that exhibits excellent vibration transmission properties is fitted into the neck portion of a main body 63 obtained by integrating the neck portion 60 and the body portion 62 through a buffer material 100, and the game controller 1230 is fitted into the conductive plate 76E through a buffer material 102 (see operation tool 2F shown in FIGS. 40A and 40B), for example. In this case, when the rear end of the conductive plate 76E has been hit, the impact is transmitted to the front side of the neck portion 60, transmitted to the game controller 1230 after being appropriately reduced by the buffer material 102, and detected as a change in acceleration by the acceleration sensor 1248.

In this embodiment, sound is filtered corresponding to a change in the position of the operation tool (i.e., game controller) to correct the production effect associated with the operation input. Note that an image effect may be added to or may replace the production effect, for example. For example, when a player character gives a live performance with other characters, an image in which the audience throws ticker tape may be displayed when rotation around the Z axis (i.e., the play side is turned upward) has been detected, and a stage production in which the colors of light emitted from spotlights are changed into various colors while changing the irradiation directions of the spotlights may be displayed when rotation around the X axis (i.e., the front end is turned upward) has been detected. This makes it possible to liven up the game. The above-mentioned items may also be applied to other embodiments.

### Modification

The first to third embodiments to which the invention is applied and their modifications have been described above. Note that the invention is not limited thereto. The elements may be appropriately modified, added, or omitted without departing from the scope of the invention.

For example, the operation tool may not be designed as a drum, but may be designed as another percussion instrument such as cymbals, bongo, congas, or guiro, may be designed as an acoustic guitar or ukulele instead of an electric guitar, or may be designed as another musical instrument such as a saxophone. When the operation tool is designed as a saxophone, the size of the operation key may be reduced as compared with the third embodiment, and the shape of the operation key may be appropriately changed. The operation tool may be an imaginary musical instrument. For example, the operation tool according to the second embodiment may be configured so that the game controller 1230 is inserted into a cylindrical buffer body instead of providing the first buffer material and the second buffer material, and the cylindrical buffer body is loosely fitted into the outer shell so that the cylindrical buffer body can slide in the axial direction. An operation input is assigned to a change in acceleration in the cylinder axial direction or the twist direction around the cylinder axial direction due to an operation that inserts or withdraws the cylindrical buffer body into or from the outer shell to implement an operation feel as if to play a trombone. Alternatively, an output correction process may be associated with an operation input in the same manner as in the third embodiment (change in position).

The operation tool may not be designed as a musical instrument, but may be designed as a human, robot, animal, vehicle, or the like.

An operation input may be associated with a production effect such as generation of vibrations instead of sound output.

The invention may be applied to a fighting game or a role-playing game so that a movement (e.g., jump), offense technique, defense position, or possessed item may be changed corresponding to a hit position. Alternatively, the invention may be applied to a driving game or a horse racing game so that an operation may be changed corresponding to a hit position or a character may be accelerated corresponding to the hit operation speed.

The operation tool according to the first embodiment may be used for a character raising game instead of a music game by utilizing the character design. In this case, the upper side rubbing operation may be associated with "praise", the lower side rubbing operation may be associated with "caress", the rear end face hitting operation may be associated with "encouragement", and the slope hitting operation may be associated with "scolding".

An auxiliary output element such as a speaker, a vibrator, or a light-emitting element may be disposed in the operation tool. The auxiliary output element may be connected to the expansion terminal 1250 of the game controller 1230 so that power and the control signal from the controller control unit 1260 are supplied to the auxiliary output element. Note that power may be supplied to the auxiliary output element from a battery provided in the operation tool.

In the third embodiment and its modification, the operation input area is formed by the keyboarded/lever operating section. Note that the operation input area may be implemented by another operating section such as a button or a dial.

The above embodiments have been described taking an example in which the operation input type is determined based on the axis for which a pulsed quick change is detected, the direction (positive/negative) of the quick change, and the magnitude of the quick change. Note that a reference signal (e.g., quick change reference waveform) may be stored in the storage section 500 as table data, and the operation input type may be determined by matching the reference signal and the input quick change utilizing known matching technology.

The above embodiments have been described taking an example in which the game controller is placed in the operation tool and the game device main body is provided separately. For example, when using a portable game device that includes a game controller and a game device main body, the portable game device may be placed in the operation tool. In this case, the portable game device may transmit an image signal and a sound signal to an external video monitor or a LAN terminal that can distribute an image signal and a sound signal via wireless communication.

A dedicated circuit or a dedicated small electronic instrument (collectively referred to as "dedicated circuit") placed in the operation tool may be used instead of a portable game device to form a toy in which the operation tool and the dedicated circuit are integrated. In this case, an auxiliary output element such as a speaker, a vibrator, or a light-emitting element may be disposed in the toy, and the dedicated circuit may control the operation of the output element.

Although only some embodiments of the invention have been described in detail above, those skilled in the art would readily appreciate that many modifications are possible in the embodiments without materially departing from the novel teachings and advantages of the invention. Accordingly, such modifications are intended to be included within the scope of the invention.

## Claims

1. An operation tool that holds a game controller that includes an acceleration detection section, the operation tool comprising:
a fitting section that is formed in such a shape that the game controller is fitted into the fitting section;
an operation input area that is provided at a position away from the fitting section, and is operated by a player; and
a transmission mechanism section that transmits an operation force applied to the operation input area to the game controller fitted into the fitting section through a transmission rod.

2. The operation tool as defined in claim 1,
the operation input area being in the shape of a keyboard, a lever, or a button.

3. The operation tool as defined in claim 1 or 2,
the fitting section holding the game controller in a state in which an operation side of the game controller is exposed.

4. The operation tool as defined in any one of claims 1 to 3,
the operation tool being in the shape of a guitar;
the fitting section being disposed in a neck portion of the guitar; and
the operation input area being disposed in the body portion of the guitar.

5. The operation tool as defined in any one of claims 1 to 3,
the operation tool being in the shape of a guitar;
the fitting section being disposed in a body portion of the guitar; and
the operation input area being disposed in a neck portion of the guitar.

6. The operation tool as defined in any one of claims 1 to 5,
the acceleration detection section detecting accelerations along a plurality of directions;
the operation input area including a plurality of operating sections; and
the transmission mechanism section including a plurality of the transmission rods that respectively correspond to the plurality of operating sections and differ in direction of force transmitted to the game controller.

7. An operation input evaluation method executed by a computer that includes a communication section, the operation input evaluation method comprising:
instructing a player to perform an operation input at a given timing;
receiving a detection signal from the acceleration detection section of the game controller held in the fitting section of the operation tool as defined in any one of claims 1 to 6 by controlling the communication section;
detecting whether or not the player has performed the operation input based on the received detection signal; and
evaluating the operation input based on whether or not the player has performed the operation input at the given timing.

8. The operation input evaluation method as defined in claim 7,
the operation input being detected by detecting whether or not the player has performed the operation input based on a quick change value obtained by differentiating an acceleration indicated by the received detection signal.

9. The operation input evaluation method as defined in claim 7 or 8,
a determination reference signal corresponding to each type of operation input being defined in advance;
the instructing of the player to perform the operation input at the given timing including instructing the player to perform a given type of operation input at the given timing;
the operation input evaluation method further comprising determining the type of operation input performed by the player based on the received detection signal; and
the operation input being evaluated based on whether or not the player has performed the instructed operation input at the given timing.

10. The operation input evaluation method as defined in claim 9,
the determination reference signal being defined based on a quick change value obtained by differentiating an acceleration; and
the type of operation input performed by the player being determined based on a quick change value obtained by differentiating an acceleration indicated by the received detection signal.

11. The operation input evaluation method as defined in any one of claims 7 to 10,
a production effect process being defined in advance corresponding to each type of operation input; and
the operation input evaluation method further comprising performing the production effect process corresponding to the type of the operation input that has been determined.

12. The operation input evaluation method as defined in any one of claims 7 to 10, further comprising:
determining the position of the operation tool or the game controller based on an acceleration indicated by the received detection signal; and
performing a given production effect process corresponding to the determined position.

13. A computer-readable storage medium storing a program that causes a computer to execute the method as defined in any one of claims 7 to 12.

14. A game device comprising:
the operation tool as defined in any one of claims 1 to 6;
a game controller that is held in the fitting section of the operation tool;
a timing instruction section that instructs a player to perform an operation input at a given timing;
a reception section that receives a detection signal from the acceleration detection section of the game controller;
an operation input detection section that detects whether or not the player has performed the operation input based on the received detection signal; and
an evaluation section that evaluates the operation input based on whether or not the timing instructed by the timing instruction section coincides with the timing detected by the operation input detection section.
